(19) Europäisches Patentamt

European Patent Office

Office européen des brevets

(11) **EP 4 660 762 A1**

(12) **EUROPEAN PATENT APPLICATION**
published in accordance with Art. 153(4) EPC

(43) Date of publication:
**10.12.2025 Bulletin 2025/50**

(21) Application number: **23928822.8**

(22) Date of filing: **17.03.2023**

(51) International Patent Classification (IPC):
**G06F 3/041** (2006.01)   **G06F 3/04883** (2022.01)
**G06F 3/0354** (2013.01)

(52) Cooperative Patent Classification (CPC):
**G06F 3/0354; G06F 3/041; G06F 3/04883**

(86) International application number:
**PCT/KR2023/003595**

(87) International publication number:
**WO 2024/195898 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Samsung Electronics Co., Ltd.**
**Suwon-si, Gyeonggi-do 16677 (KR)**

(72) Inventors:
• **BUI, Tan Manh**
  **Suwon-si, Gyeonggi-do 16677 (KR)**
• **DO, Duong Thuy**
  **Suwon-si, Gyeonggi-do 16677 (KR)**

• **NGUYEN, Dao Thi Anh**
  **Suwon-si, Gyeonggi-do 16677 (KR)**
• **NGUYEN, Dung Tien**
  **Suwon-si, Gyeonggi-do 16677 (KR)**
• **NGUYEN, Long Trung**
  **Suwon-si, Gyeonggi-do 16677 (KR)**
• **VU, Tuan Trong**
  **Suwon-si, Gyeonggi-do 16677 (KR)**
• **TRUONG, Loan Thi**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR CORRECTING STROKE BY USING ELECTRONIC PEN**

(57)    A method for displaying, on an electronic device, a stroke made using an electronic pen, according to an embodiment, may include receiving stroke data related to a stroke made using the electronic pen, detecting a missing stroke, which is a stroke made using the electronic pen outside of a displayable area of the electronic device, obtaining missing stroke data regarding the detected missing stroke, adjusting a layout of the displayable area based on the missing stroke data, and displaying the missing stroke in the displayable area according to the adjusted layout.

FIG. 2

```
        START
          │
 RECEIVE STROKE DATA ──── 210
          │
 DETECT MISSING STROKE ──── 220
          │
 OBTAIN MISSING STROKE DATA ──── 230
          │
 ADJUST LAYOUT OF
 DISPLAYABLE AREA ──── 240
          │
 DISPLAY MISSING STROKE IN
 DISPLAYABLE AREA ──── 250
          │
         END
```

EP 4 660 762 A1

**Description**

**Technical Field**

Various embodiments relate to a method and device for correcting a stroke made using an electronic pen.

**Background Art**

Electronic devices have been developed to receive various inputs from users via specific input devices connected to an electronic device via wireless communication. The electronic device may identify a location thereon designated by an input device having a pen function, and perform a corresponding function.

The electronic device may detect a magnetic field generated by an electronic pen by using an electromagnetic induction method. The electronic device may identify a location of the electronic pen based on an induced electromotive force produced by the magnetic field on a channel-by-channel basis.

The electronic pen may be connected to the electronic device via short-range communication. For example, the electronic pen may transmit, via short-range communication, to the electronic device, information about a pressed state of a button disposed on a housing of the electronic pen, and the electronic device may perform a specified operation based on the received information.

**Disclosure of Invention**

**Technical Problem**

When a user uses an electronic pen on an electronic device, a stroke made using the electronic pen (hereinafter, a stroke using the electronic pen) may be displayed on the electronic device. The user may use the electronic pen even when it is outside a display area of the electronic device. The electronic device may not display a stroke that is outside the display area of the electronic device. The stroke that is outside the display area of the electronic device may be missed and not displayed on the display of the electronic device.

According to various embodiments, when a stroke made using an electronic pen is missed, the missing stroke may be displayed on a display of an electronic device by obtaining missing stroke data and adjusting a layout of the display.

**Solution to Problem**

According to an embodiment, a method for displaying, on an electronic device, a stroke made using an electronic pen may include receiving stroke data related to a stroke made using the electronic pen.

According to an embodiment, the method for displaying, on the electronic device, the stroke made using the electronic pen may include detecting a missing stroke, which is a stroke made using the electronic pen outside of a displayable area of the electronic device.

According to an embodiment, the method for displaying, on the electronic device, the stroke made using the electronic pen may include obtaining missing stroke data regarding the detected missing stroke.

According to an embodiment, the method for displaying, on the electronic device, the stroke made using the electronic pen may include adjusting a layout of the displayable area based on the missing stroke data.

According to an embodiment, the method for displaying, on the electronic device, the stroke made using the electronic pen may include displaying the missing stroke in the displayable area according to the adjusted layout.

An electronic device for displaying a stroke made using an electronic pen, according to an embodiment, may include a display, a memory storing at least one instruction, and at least one processor.

The at least one processor may be configured to execute the at least one instruction to receive stroke data related to a stroke made using the electronic pen.

The at least one processor may be configured to execute the at least one instruction to detect a missing stroke, which is a stroke made using the electronic pen outside of a displayable area of the electronic device.

The at least one processor may be configured to execute the at least one instruction to obtain missing stroke data regarding the detected missing stroke.

The at least one processor may be configured to execute the at least one instruction to adjust a layout of the displayable area based on the missing stroke data.

The at least one processor may be configured to execute the at least one instruction to display the missing stroke in the displayable area according to the adjusted layout.

A computer-readable recording medium according to an embodiment may have stored thereon a program for performing a method for displaying, on an electronic device, a stroke made using an electronic pen, according to an embodiment.

## Brief Description of Drawings

FIG. 1 is a diagram illustrating a process for correcting a missing stroke, according to an embodiment.
FIG. 2 is a flowchart of a method for displaying, on an electronic device, a stroke made using an electronic pen, according to an embodiment.
FIG. 3 is a flowchart of a method for detecting a missing stroke, according to an embodiment.
FIG. 4 is a diagram illustrating a method for activating a missing stroke detection mode, according to an embodiment.
FIG. 5 is a diagram illustrating a process for detecting that a missing stroke returns to a displayable area from outside of the display area, according to an embodiment.
FIG. 6 is a diagram illustrating a method for obtaining missing stroke data after detecting that a missing stroke has occurred entirely outside a displayable area, according to an embodiment.
FIG. 7 is a flowchart of a method for obtaining missing stroke data, according to an embodiment.
FIG. 8 is a diagram illustrating a method for calculating a pen tip location of an electronic pen, according to an embodiment.
FIG. 9 is a diagram illustrating a method for calculating a pen tip location of an electronic pen on a virtual display area, according to an embodiment.
FIG. 10 is a diagram illustrating a method for calculating a pen tip location of an electronic pen on a virtual display area, according to an embodiment.
FIG. 11 is a flowchart of a method for adjusting a layout of a displayable area of an electronic device, according to an embodiment.
FIG. 12 is a diagram illustrating a method for moving an entire set of strokes to an empty space, according to an embodiment.
FIG. 13 is a diagram illustrating a method for adjusting a size of an entire set of strokes according to a ratio between a virtual display area and a displayable area, according to an embodiment.
FIG. 14 is a diagram illustrating a method for calculating a pen tip location of an electronic pen by using a location of a beacon, according to an embodiment.
FIG. 15 is a diagram illustrating a method for calculating a pen tip location of an electronic pen by using a location of a beacon, according to an embodiment.
FIG. 16 is a diagram illustrating a method for adjusting a layout of a displayable area based on an empty space between each stroke, according to an embodiment.
FIG. 17 is a diagram illustrating a method for obtaining missing stroke data by using at least one of smart glasses, a smart ring, and a smart watch, according to an embodiment.
FIG. 18 is a diagram illustrating a method for correcting a missing stroke, according to an embodiment.
FIG. 19 is a block diagram of a configuration of an electronic device according to an embodiment.
FIG. 20 is a diagram illustrating a configuration of an electronic pen according to an embodiment.

## Mode for the Invention

Embodiments will be described more fully hereinafter with reference to the accompanying drawings so that they may be easily implemented by one of ordinary skill in the art. However, the disclosure may be implemented in various different forms and is not limited to the embodiments described herein. In addition, parts not related to descriptions of the disclosure are omitted to clearly explain the disclosure in the drawings, and like reference numerals denote like elements throughout.

The terms used in the disclosure may be general terms currently widely used in the art by taking into account functions described herein, but may vary according to an intention of skilled persons engaged in the art, precedent cases, advent of new technologies, etc. Furthermore, specific terms may be arbitrarily selected by the applicant, and in this case, the meaning of the selected terms will be described in detail in the relevant description. Thus, the terms used herein should be defined not by simple appellations thereof but based on the meaning of the terms together with the overall description of the disclosure.

Moreover, in the specification, when a component is referred to as being "connected" or "coupled" to another component, this includes a case where the component is directly connected to the other component as well as a case where it is coupled to the other component with another intervening component therebetween. Furthermore, when a component "includes" or "comprises" another component, unless there is a particular description contrary thereto, it is understood that the component may further include other components, not excluding the other components.

Furthermore, although the terms including an ordinal number such as "first", "second", etc. may be used herein to describe various elements or components, these elements or components should not be limited by the terms. The terms are only used to distinguish one element or component from another element or component.

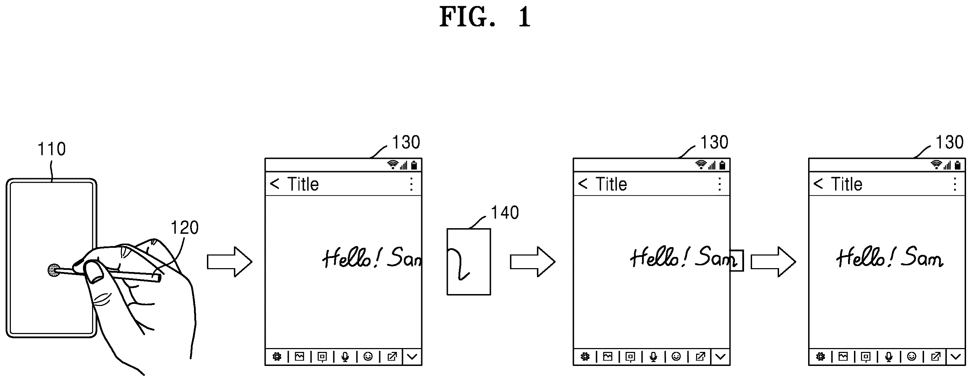

FIG. 1 is a diagram illustrating a process for correcting a missing stroke 140, according to an embodiment.

Referring to FIG. 1, the electronic device 110 may be implemented in various forms including a display, such as a TV, a smart monitor, a mobile phone, a tablet PC, a digital camera, a camcorder, a laptop computer, a desktop, an e-book reader, a digital broadcasting terminal, personal digital assistants (PDAs), a portable multimedia player (PMP), a navigation device, an MP3 player, a wearable device, etc. In addition, the electronic device 110 may be a stationary electronic device positioned at a fixed location or a mobile electronic device having a portable form, and may be a digital broadcasting receiver capable of receiving digital broadcasts. However, the electronic device 110 is not limited thereto.

In an embodiment, the electronic pen 120 is a pen-shaped tool used to control the electronic device 110, and may include a stylus or a stylus pen. For example, the electronic pen 120 may be the S-pen. However, the electronic pen 120 is not limited thereto.

In an embodiment, a user may control the electronic device 110 by performing actions such as directly tapping or dragging the electronic pen 120 on a display of the electronic device 110 or clicking a button on the electronic pen 120.

In an embodiment, the electronic device 110 may transmit and receive data to and from the electronic pen 120 via wired or wireless communication. For example, the electronic pen 120 may perform communication to transmit stroke data or missing stroke data.

In an embodiment, the electronic device 110 and the electronic pen 120 may be communicatively connected to each other via a wired or wireless communication interface. For example, the wired communication interface may include a High-Definition Multimedia Interface (HDMI), a Universal Serial Bus (USB), an optical interface, a D-subminiature (D-sub), a Digital Visual Interface (DVI), a Display Port, etc. In addition, the wireless communication interface may include a Wireless Fidelity (WiFi) module, a Bluetooth module, etc.

In an embodiment, the electronic device 110 and the electronic pen 120 may share data with each other by using a Web Real-Time Communication (RTC) scheme. For example, Web RTC is a peer-to-peer (P2P) communication scheme that enables direct data transfer without a central server, allowing real-time sharing of audio, video, data, etc. on the web without the need for a separate plug-in or software. However, the disclosure is not limited thereto, and the electronic device 110 may communicate with the electronic pen 120 by using various wired or wireless communication methods.

In an embodiment, a stroke may refer to an action or result of generating a line, dot, character, or drawing on the display of the electronic device 110 by using the electronic pen 120. However, the stroke is not limited thereto.

In an embodiment, the electronic device 110 may display, on the electronic device 110, a stroke(s) made using the electronic pen 120 (hereinafter, a stroke(s) using the electronic pen 120) . In an embodiment, the user may generate a stroke on the electronic device 110 by using the electronic pen 120.

In an embodiment, the electronic device 110 may display, on the display of the electronic device 110, the stroke using the electronic pen 120. In an embodiment, the electronic device 110 may display the stroke using the electronic pen 120 in a displayable area 130 of the electronic device 110.

In an embodiment, the displayable area 130 may refer to an area in which the electronic device 110 is able to display a stroke on the display. In an embodiment, the displayable area 130 may refer to an area of the display of the electronic device 110 in which strokes using the electronic pen 120 are to be displayed.

In an embodiment, the user may generate strokes on the display of the electronic device 110 by using the electronic pen 120. In an embodiment, the user may generate strokes on the displayable area 130 of the electronic device 110 by using the electronic pen 120. For example, the user may generate strokes of "Hello! Sam" on the displayable area 130 of the electronic device 110 by using the electronic pen 120.

In an embodiment, the strokes may be displayed on the display of the electronic device 110. In an embodiment, the strokes may be displayed in the displayable area 130 of the electronic device 110. For example, the strokes "Hello! Sam" may be displayed in the displayable area 130 of the electronic device 110.

In an embodiment, in case that a stroke using the electronic pen 120 occurs outside of the display of an electronic device 110, the electronic device 110 may not be able to display, on the electronic device 110, the stroke occurring outside of the display. In an embodiment, in case that a stroke using the electronic pen 120 occurs outside of the displayable area 130 of the electronic device 110, the electronic device 110 may not be able to display, on the electronic device 110, the stroke occurring outside of the displayable area 130.

In an embodiment, a stroke occurring outside the displayable area 130 may be the missing stroke 140. In an embodiment, the missing stroke 140 may not be displayed on the display of the electronic device 110. In an embodiment, the missing stroke 140 may not be displayed in the displayable area 130 of the electronic device 110. For example, in an entire set of the strokes "Hello! Sam", an end portion of the "m" may occur outside of the displayable area, resulting in a missing stroke.

In an embodiment, the electronic device 110 may not be able to display the missing stroke 140 on the display of the electronic device 110. In an embodiment, the electronic device 110 may not be able to display the missing stroke 140 in the displayable area 130 of the electronic device 110.

In an embodiment, the electronic device 110 may detect the missing stroke 140, which is a stroke made using the electronic pen 120 outside of the displayable area 130 of the electronic device 110.

In an embodiment, the electronic device 110 may obtain missing stroke data regarding the detected missing stroke 140. In an embodiment, the electronic device 110 may obtain, from the electronic pen 120, missing stroke data regarding the detected missing stroke 140. In an embodiment, the electronic pen 120 may transmit the missing stroke data to the electronic device 110.

In an embodiment, the electronic device 110 may adjust (or relocate or resize) a layout of the displayable area 130 based on the missing stroke data.

In an embodiment, when there is an empty space in the displayable area 130 based on at least one of a direction of use of the electronic pen 120, a virtual display area, and the displayable area 130, the electronic device 110 may move an entire set of strokes to the empty space. For example, in case that the electronic pen 120 is being used from left to right, and the size of the missing stroke 140 is less than that of a left empty space in the displayable area 130, "Hello! Sam" that is the entire set of strokes may be moved to the left.

In an embodiment, the electronic device 110 may display the missing stroke 140 in the displayable area 130 according to the adjusted layout. For example, as "Hello! Sam" that is the entire set of strokes is moved to the left, the end portion of "m", which is the missing stroke 140, may be displayed in the displayable area 130 so as to be connected to the entire set of strokes.

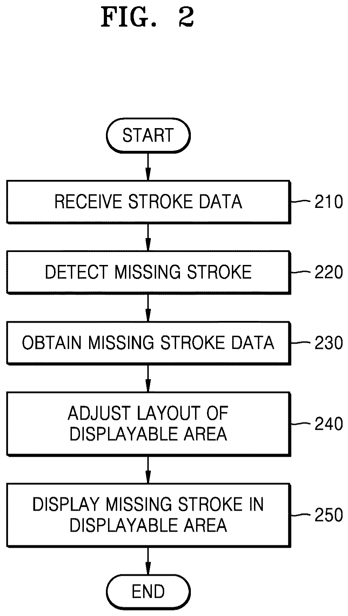

FIG. 2 is a flowchart of a method for displaying, on the electronic device 110, a stroke using the electronic pen 120, according to an embodiment.

Referring to FIG. 2, the electronic device 110 may receive stroke data related to a stroke using the electronic pen 120 (210).

In an embodiment, the electronic device 110 may receive, from the electronic pen 120, the stroke data related to the stroke using the electronic pen 120. In an embodiment, the electronic pen 120 may transmit the stroke data to the electronic device 110.

In an embodiment, by using the received stroke data, the electronic device 110 may display, on the electronic device 110, the stroke using the electronic pen 120. In an embodiment, by using the received stroke data, the electronic device 110 may display, on the display of the electronic device 110, the stroke using the electronic pen 120. In an embodiment, by using the received stroke data, the electronic device 110 may display the stroke using the electronic pen 120 in a displayable area of the electronic device 110.

In an embodiment, the stroke data may include at least one of pressure sensor data, infrared sensor data, ultrasonic sensor data, electrical signal data, magnetic signal data, electrostatic signal data, accelerometer data, gyroscope data, magnetometer data, pen tip location (or position) data, tilt data, and beacon location (or position) of the electronic pen 120. However, the stroke data is not limited thereto.

In an embodiment, by using the stroke data, the electronic device 110 may detect (or identify or recognize) stroke using the electronic pen 120 in the displayable area of the electronic device 110. In an embodiment, when the electronic device 110 detects the stroke using the electronic pen 120 in the displayable area of the electronic device 110, the electronic device 110 may display the stroke in the displayable area of the electronic device 110.

In an embodiment, the electronic device 110 may detect (or identify or recognize) a missing stroke, which is a stroke made using the electronic pen 120 outside of the displayable area of the electronic device 110 (220).

In an embodiment, the electronic device 110 may activate a missing stroke detection mode when the electronic device 110 detects a stroke using the electronic pen 120 at an edge of the displayable area of the electronic device 110.

In an embodiment, the missing stroke detection mode may be a system for detecting a stroke that is made using the electronic pen 120 outside of the displayable area of the electronic device 110. In an embodiment, the missing stroke detection mode may use stroke data related to a stroke using the electronic pen 120.

In an embodiment, the electronic device 110 may detect, via the missing stroke detection mode, a missing stroke that is a stroke using the electronic pen 120 outside of the displayable area of the electronic device 110.

In an embodiment, by using the stroke data, the electronic device 110 may detect a missing stroke that is a stroke made using the electronic pen 120 outside of the displayable area of the electronic device 110.

In an embodiment, the electronic device 110 may not be able to display the missing stroke on the electronic device 110. In an embodiment, the electronic device 110 may not be able to display the missing stroke on the display of the electronic device 110. In an embodiment, the electronic device 110 may not be able to display the missing stroke in the displayable area of the electronic device 110.

In an embodiment, by using the stroke data, the electronic device 110 may determine whether the use of the electronic pen 120 outside of the displayable area of the electronic device 110 is a stroke. In an embodiment, when the electronic device 110 determines that the use of the electronic pen 120 outside of the displayable area of the electronic device 110 is not a stroke, the electronic device 110 may not recognize it as a missing stroke.

In an embodiment, the electronic device 110 may obtain missing stroke data regarding the detected missing stroke (230). In an embodiment, the electronic device 110 may obtain, from the electronic pen 120, missing stroke data regarding the detected missing stroke.

In an embodiment, the missing stroke data may include at least one of pen tip location (or position) data, accelerometer data, gyroscope data, magnetometer data, tilt data, time data, sensor data, and direction (or orientation) data of the electronic pen 120. However, the missing stroke data is not limited thereto.

In an embodiment, the electronic device 110 may obtain missing stroke data while a missing stroke is occurring. In an embodiment, the electronic device 110 may stop obtaining missing stroke data when a missing stroke does not occur.

In an embodiment, the electronic device 110 may determine whether a missing stroke occurs by using the missing stroke data. In an embodiment, by using the missing stroke data, the electronic device 110 may measure whether at least one of acceleration and coordinates of the electronic pen 120 exceed a threshold value. In an embodiment, when the at least one of the acceleration and the coordinates of the electronic pen 120 exceeds the threshold value, the electronic device 110 may determine that a missing stroke does not occur and stop obtaining the missing stroke data.

In an embodiment, the electronic device 110 may generate a virtual display area that extends beyond the displayable area in a direction in which the missing stroke is detected. In an embodiment, the electronic device 110 may obtain missing stroke data by calculating a pen tip location (or position) of the electronic pen 120 on the virtual display area.

In an embodiment, the virtual display area may be an arbitrary two-dimensional (2D) plane created (or generated) by extending from an edge of the display of the electronic device 110 in the direction in which the missed stroke is detected. However, the virtual display area is not limited thereto.

In an embodiment, the virtual display area may be a virtual 2D plane generated to calculate the pen tip location of the electronic pen 120. In an embodiment, the virtual display area may be a virtual 2D plane generated to obtain a missing stroke.

In an embodiment, the electronic device 110 may obtain a missing stroke by using the missing stroke data. In an embodiment, by using the missing stroke data, the electronic device 110 may obtain a missing stroke connected by calculating the pen tip location of the electronic pen 120 on the virtual display area. In an embodiment, the missing stroke may be a stroke connected by calculating the pen tip location of the electronic pen 120 on the virtual display area.

In an embodiment, the electronic device 110 may adjust (or relocate, resize, or re-layout) a layout of the displayable area based on the missing stroke data (240).

In an embodiment, the electronic device 110 may adjust the layout of the displayable area so that the missing stroke obtained using the missing stroke data may be displayed in the displayable area of the electronic device 110.

In an embodiment, when there is an empty space (or area) in the displayable area based on at least one of a direction of use of the electronic pen 120, the virtual display area, and the displayable area, the electronic device 110 may move an entire set of strokes to the empty space.

In an embodiment, the empty space may refer to an empty space in the displayable area in a direction opposite to the direction of use of the electronic pen 120.

In an embodiment, the electronic device 110 may determine whether there is an empty space by comparing a size of the virtual display area including the missing stroke with a size of the empty space.

In an embodiment, when there is no empty space in the displayable area, the electronic device 110 may adjust a size of the entire set of strokes according to a ratio between the virtual display area and the displayable area.

In an embodiment, the ratio between the virtual display area and the displayable area may mean a reduction ratio that allows the missing stroke to be displayed in the displayable area.

In an embodiment, the electronic device 110 may display the missing stroke in the displayable area according to the adjusted layout (250).

In an embodiment, when the electronic device 110 moves the entire set of strokes to the empty space in the displayable area, the electronic device 110 may display the missing stroke to be connected to the entire set of strokes.

In an embodiment, when the electronic device 110 adjusts the size of the entire set of strokes, the electronic device 110 may adjust a size of the missing stroke proportionally and display the missing stroke to be connected to the entire set of strokes.

In an embodiment, the missing stroke may be displayed so that it is connected to the entire set of strokes to complete a single letter (or text) or drawing (or picture). **In** an embodiment, the missing stroke may be added to and connected to a missing portion in the entire set of strokes.

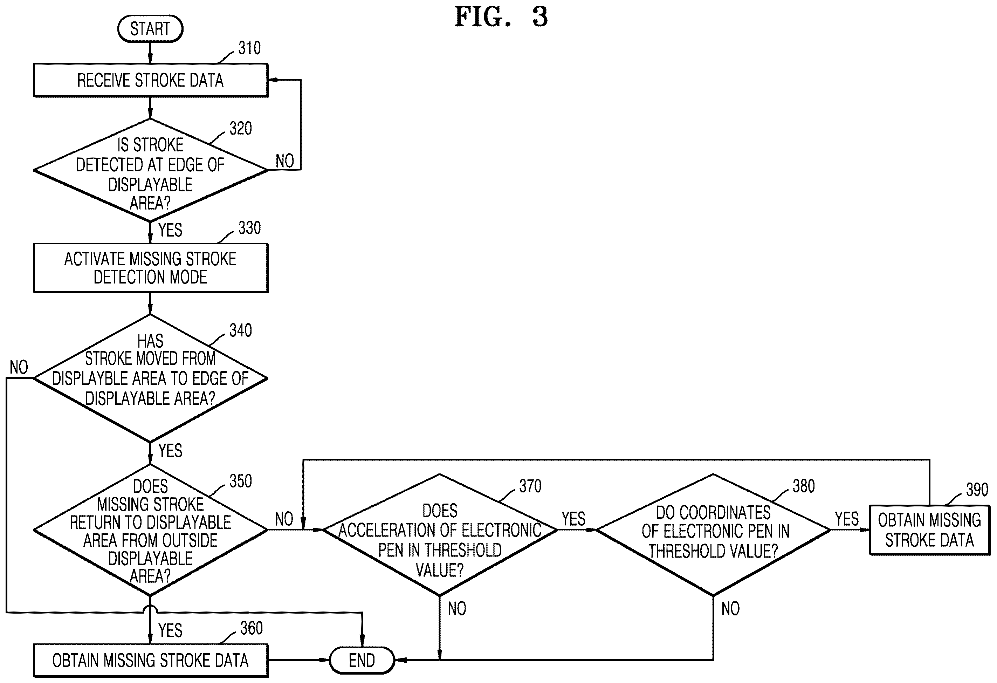

FIG. 3 is a flowchart of a method for detecting a missing stroke, according to an embodiment.

Referring to FIG. 3, the electronic device 110 may receive stroke data related to a stroke using the electronic pen 120 (310). In an embodiment, the electronic device 110 may receive, from the electronic pen 120, the stroke data related to the stroke using the electronic pen 120.

In an embodiment, by using the stroke data, the electronic device 110 may detect the stroke using the electronic pen 120 in a displayable area of the electronic device 110. In an embodiment, when the electronic device 110 detects the strokes using the electronic pen 120 in the displayable area of the electronic device 110, the electronic device 110 may display the stroke in the displayable area of the electronic device 110.

In an embodiment, by using the received stroke data, the electronic device 110 may display the stroke using the electronic pen 120 in the displayable area of the electronic device 110.

In an embodiment, the electronic device 110 may detect a stroke using the electronic pen 120 at an edge of the displayable area of the electronic device 110 (320).

In an embodiment, the electronic device 110 may continuously receive stroke data when the electronic device 110 does not detect a stroke made using the electronic pen 120 at the edge of the displayable area of the electronic device 110.

In an embodiment, the electronic device 110 may activate a missing stroke detection mode when the electronic device 110 detects a stroke using the electronic pen 120 at the edge of the displayable area of the electronic device 110 (330).

In an embodiment, the missing stroke detection mode may be a system for detecting a stroke that is made using the electronic pen 120 outside of the displayable area of the electronic device 110. In an embodiment, the missing stroke detection mode may use stroke data related to a stroke using the electronic pen 120.

In an embodiment, the electronic device 110 may detect, via the missing stroke detection mode, a missing stroke that is a stroke using the electronic pen 120 outside of the displayable area of the electronic device 110.

In an embodiment, by using the stroke data, the electronic device 110 may detect a missing stroke that is a stroke made using the electronic pen 120 outside of the displayable area of the electronic device 110.

In an embodiment, when the missing stroke mode is activated, the electronic pen 120 may detect whether a stroke using the electronic pen 120 occurs outside of the displayable area.

In an embodiment, when the missing stroke mode is activated, the electronic pen 120 may transmit, to the electronic device 110, a signal indicating whether a missing stroke is occurring.

In an embodiment, the electronic device 110 may determine whether a stroke using the electronic pen 120 has moved from the displayable area of the electronic device 110 to the edge of the displayable area (340).

In an embodiment, the electronic pen 120 may transmit, to the electronic device 110, a signal indicating whether the stroke using the electronic pen 120 has moved from the displayable area of the electronic device 110 to the edge of the displayable area.

In an embodiment, the electronic device 110 may determine, through pen tip location (or position) information of the electronic pen 120, whether the stroke using the electronic pen 120 has moved from the displayable area of the electronic device 110 to the edge of the displayable area.

In an embodiment, the electronic pen 120 may inform a trajectory of the stroke using the electronic pen 120 by transmitting the pen tip location information of the electronic pen 120 to the electronic device 110. In an embodiment, by transmitting the pen tip location information of the electronic pen 120 to the electronic device 110, the electronic pen 120 may inform the electronic device 110 whether the stroke using the electronic pen 120 has moved from the displayable area of the electronic device 110 to the edge of the displayable area.

In an embodiment, when it is determined that the stroke has not moved from the displayable area of the electronic device 110 to the edge of the displayable area, the electronic device 110 may consider that a stroke using the electronic pen 120 is not occurring and end the operation.

In an embodiment, when it is determined that the stroke has moved from the displayable area of the electronic device 110 to the edge of the displayable area, the electronic device 110 may consider that the stroke using the electronic pen 120 is occurring.

In an embodiment, the electronic device 110 may determine whether a missing stroke returns to the displayable area from outside the displayable area (350).

In an embodiment, by using the stroke data, the electronic device 110 may determine whether the missing stroke returns to the displayable area of the electronic device 110 from outside the displayable area.

In an embodiment, the electronic pen 120 may transmit, to the electronic device 110, a signal indicating whether the missing stroke returns to the displayable area of the electronic device 110 from outside the displayable area.

In an embodiment, the electronic device 110 may determine, through pen tip location information of the electronic pen 120, whether the missing stroke returns to the displayable area of the electronic device 110 from outside the displayable area.

In an embodiment, by transmitting the pen tip location information of the electronic pen 120 to the electronic device 110, the electronic pen 120 may inform the electronic device 110 whether the missing stroke returns to the displayable area of the electronic device 110 from outside the displayable area.

In an embodiment, when the missing stroke returns to the displayable area from outside the displayable area, the electronic device 110 may display, in the displayable area of the electronic device 110, a stroke after the stroke returns to the displayable area.

In an embodiment, the stroke that returns to the displayable area from outside the displayable area may take the form of a character or drawing (or picture) that is truncated relative to the edge of the displayable area of the electronic device 110.

In an embodiment, when the electronic device 110 detects that the missing stroke returns to the displayable area from outside the displayable area, the electronic device 110 may obtain missing stroke data regarding the missing stroke that is outside the displayable area (360).

In an embodiment, the electronic pen 120 may transmit, to the electronic device 110, the missing stroke data regarding the missing stroke that is outside the displayable area.

In an embodiment, the electronic device 110 may obtain the missing stroke data during a time period from when the stroke leaves the displayable area to when the stroke returns to the displayable area. In an embodiment, the electronic device 110 may stop obtaining missing stroke data from the time when the stroke returns to the displayable area.

In an embodiment, the electronic pen 120 may transmit, to the electronic device 110, the missing stroke data during the time period from when the stroke leaves the displayable area to when the stroke returns to the displayable area.

In an embodiment, when the electronic device 110 determines that the missing stroke does not return to the displayable area from outside the displayable area, the electronic device 110 may consider that the missing stroke has occurred entirely outside of the displayable area.

In an embodiment, by using the stroke data, the electronic device 110 may determine whether the use of the electronic pen 120 outside of the displayable area of the electronic device 110 is a stroke. In an embodiment, when the electronic device 110 determines that the use of (or writing with) the electronic pen 120 outside of the displayable area of the electronic device 110 is not a stroke, the electronic device 110 may not recognize it as a missing stroke.

In an embodiment, the electronic device 110 may determine whether acceleration of the electronic pen 120 exceeds a threshold value (370).

In an embodiment, an accelerometer may refer to a sensor capable of measuring acceleration of the electronic pen 120 along three-dimensional (3D) coordinate axes.

In an embodiment, the threshold value may refer to a maximum value of an error range within which it can be determined that a stroke using the electronic pen 120 is occurring. In an embodiment, the threshold value may be a value arbitrarily set by the user.

In an embodiment, the electronic device 110 may receive, from the electronic pen 120, data of an accelerometer included in the electronic pen 120 and determine whether the acceleration of the electronic pen 120 exceeds the threshold value.

In an embodiment, the electronic pen 120 may transmit, to the electronic device 110, data of the accelerometer included in the electronic pen 120.

In an embodiment, the data of the accelerometer included in the electronic pen 120 may be data obtained by measuring acceleration of the electronic pen 120 along the 3D coordinate axes.

In an embodiment, when the electronic device 110 determines that the acceleration of the electronic pen 120 exceeds the threshold value, the electronic device 110 may consider that a stroke using the electronic pen 120 is not occurring and terminate the operation.

In an embodiment, when it is determined that the acceleration of the electronic pen 120 exceeds the threshold value, the electronic device 110 may consider that the user has stopped generating a stroke using the electronic pen 120.

In an embodiment, when the electronic device 110 determines that the acceleration of the electronic pen 120 does not exceed the threshold value, the electronic device 110 may determine whether coordinates of the electronic pen 120 exceed a threshold value (380).

In an embodiment, the gyroscope may refer to a sensor capable of measuring a rotation direction, a rotation angle, and an angular velocity of the electronic pen 120 in three dimensions.

In an embodiment, the electronic device 110 may receive, from the electronic pen 120, data of the gyroscope included in the electronic pen 120 and determine whether the coordinates of the electronic pen 120 exceed the threshold value.

In an embodiment, the electronic pen 120 may transmit, to the electronic device 110, data of the gyroscope included in the electronic pen 120.

In an embodiment, the data of the gyroscope included in the electronic pen 120 may be data obtained by measuring the rotation direction, rotation angle, and angular velocity of the electronic pen 120 in three dimensions.

In an embodiment, the electronic device 110 may determine whether a z-axis coordinate of the electronic pen 120 exceeds a threshold value. In an embodiment, the electronic device 110 may receive, from the electronic pen 120, data of the gyroscope included in the electronic pen 120 and determine whether the z-axis coordinate of the electronic pen 120 exceeds the threshold value.

In an embodiment, when the electronic device 110 determines that the z-axis coordinate of the electronic pen 120 exceeds the threshold value, the electronic device 110 may consider that a stroke using the electronic pen 120 is not occurring and terminate the operation.

In an embodiment, when it is determined that the z-axis coordinate of the electronic pen 120 exceeds the threshold value, the electronic device 110 may consider that the user has stopped generating a stroke using the electronic pen 120.

In an embodiment, when the electronic device 110 determines that the coordinates of the electronic pen 120 do not exceed the threshold value, the electronic device 110 may obtain missing stroke data (390).

In an embodiment, when the electronic device 110 detects that the missing stroke has occurred entirely outside of the displayable area, the electronic device 110 may obtain the missing stroke data by using data of at least one of the accelerometer and the gyroscope included in the electronic pen 120 until at least one of the acceleration and the coordinates of the electronic pen 120 does not exceed the corresponding threshold value.

In an embodiment, when the electronic device 110 detects that the missing stroke has occurred entirely outside of the displayable area, the electronic device 110 may receive, from the electronic pen 120, data from at least one of the accelerometer and the gyroscope included in the electronic pen 120.

In an embodiment, the electronic pen 120 may transmit, to the electronic device 110, the data from at least one of the accelerometer and the gyroscope included in the electronic pen 120.

In an embodiment, the electronic device 110 may receive the missing stroke data from the electronic pen 120 until the at least one of the acceleration and the coordinates of the electronic pen 120 does not exceed the corresponding threshold value.

In an embodiment, the electronic pen 120 may transmit the missing stroke data to the electronic device 110 until the at least one of the acceleration and the coordinates of the electronic pen 120 does not exceed the corresponding threshold value.

In an embodiment, when the at least one of the acceleration and the coordinates of the electronic pen 120 exceed the threshold value, the electronic device 110 may stop obtaining the missing stroke data. In an embodiment, when the at least one of the acceleration and the coordinates of the electronic pen 120 exceeds the threshold value, the electronic device 110 may consider that the user has stopped generating (or creating) a stroke using the electronic pen 120.

In an embodiment, the electronic device 110 may obtain the missing stroke data from a time point when the stroke using the electronic pen 120 leaves the displayable area of the electronic device 110 to a time point when the at least one of the acceleration and the coordinates of the electronic pen 120 exceeds the threshold value.

In an embodiment, the electronic device 110 may receive, from the electronic pen 120, the missing stroke data from the time point when the stroke using the electronic pen 120 leaves the displayable area of the electronic device 110 to the time point when the at least one of the acceleration and the coordinates of the electronic pen 120 exceeds the threshold value.

In an embodiment, the electronic device 110 may transmit, to the electronic device 110, the missing stroke data from the time point when the stroke using the electronic pen 120 leaves the displayable area of the electronic device 110 to the time point when the at least one of the acceleration and the coordinates of the electronic pen 120 exceeds the threshold value.

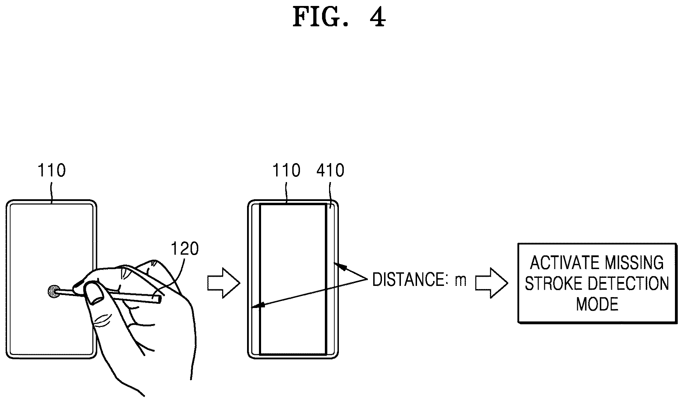

FIG. 4 is a diagram illustrating a method for activating a missing stroke detection mode, according to an embodiment.

Referring to FIG. 4, the electronic device 110 may receive stroke data related to a stroke using the electronic pen 120. In an embodiment, the electronic device 110 may receive, from the electronic pen 120, the stroke data related to the a stroke using the electronic pen 120.

In an embodiment, by using the stroke data, the electronic device 110 may detect the a stroke using the electronic pen 120 in the displayable area of the electronic device 110. In an embodiment, when the electronic device 110 detects the stroke using the electronic pen 120 in the displayable area of the electronic device 110, the electronic device 110 may display the stroke in the displayable area of the electronic device 110.

In an embodiment, by using the received stroke data, the electronic device 110 may display the stroke using the electronic pen 120 in the displayable area of the electronic device 110.

In an embodiment, the electronic device 110 may detect the stroke using the electronic pen 120 at an edge 410 of the displayable area.

In an embodiment, the edge 410 of displayable area may refer to an area from left and right ends of the electronic device 110 up to a certain distance. For example, the edge 410 of displayable area may be an area of a distance m from the left and right ends of the electronic device 110.

In an embodiment, the electronic pen 120 may detect whether a stroke using the electronic pen 120 occurs at the edge 410 of the displayable area. In an embodiment, when the electronic pen 120 detects that the stroke using the electronic pen 120 has occurred at the edge 410 of the displayable area, the electronic pen 120 may transmit a signal to the electronic device 110.

In an embodiment, the electronic device 110 may detect the stroke using the electronic pen 120 at the edge 410 of the displayable area by receiving the signal from the electronic pen 120.

In an embodiment, the electronic device 110 may activate a missing stroke detection mode when the electronic device 110 detects the stroke using the electronic pen 120 at the edge 410 of the displayable area. For example, the electronic device 110 may activate the missing stroke detection mode when the electronic device 110 detects the stroke of the electronic pen 120 in the area of the distance m from the left and right ends of the electronic device 110.

In an embodiment, the missing stroke detection mode may be a system for detecting a stroke that is made using the electronic pen 120 outside of the displayable area of the electronic device 110. In an embodiment, the missing stroke detection mode may use stroke data related to a stroke made using the electronic pen 120.

In an embodiment, the electronic device 110 may detect, via the missing stroke detection mode, a missing stroke that is a stroke using the electronic pen 120 outside of the displayable area of the electronic device 110.

In an embodiment, by using the stroke data, the electronic device 110 may detect a missing stroke that is a stroke using the electronic pen 120 outside of the displayable area of the electronic device 110.

In an embodiment, when the missing stroke mode is activated, the electronic pen 120 may detect whether a stroke using the electronic pen 120 occurs outside of the displayable area.

In an embodiment, when the missing stroke mode is activated, the electronic pen 120 may transmit, to the electronic device 110, a signal indicating whether a missing stroke is occurring.

In an embodiment, the electronic device 110 may detect a missing stroke by receiving the signal from the electronic pen 120.

In an embodiment, the electronic device 110 may not be able to display, on the displayable area of the electronic device 110, the missing stroke occurring outside the displayable area of the electronic device 110.

In an embodiment, when the electronic device 110 detects the missing stroke via the missing stroke detection mode, the electronic device 110 may obtain missing stroke data regarding the detected missing stroke.

In an embodiment, when the electronic device 110 detects the missing stroke via the missing stroke detection mode, the electronic device 110 may obtain missing stroke data from the electronic pen 120.

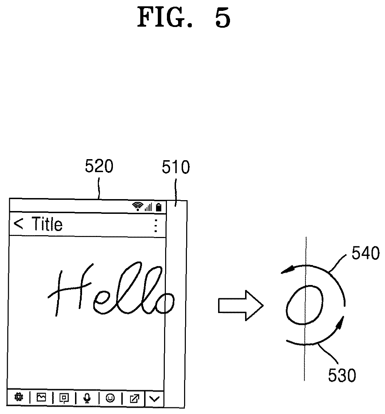

FIG. 5 is a diagram illustrating a process for detecting that a missing stroke returns to a displayable area 520 from an outside 510 of the displayable area, according to an embodiment.

Referring to FIG. 5, the electronic device 110 may receive stroke data related to a stroke using the electronic pen 120. In an embodiment, the electronic device 110 may receive, from the electronic pen 120, the stroke data related to the stroke using the electronic pen 120.

In an embodiment, by using the stroke data, the electronic device 110 may detect the stroke using the electronic pen 120 in the displayable area 520 of the electronic device 110. In an embodiment, when the electronic device 110 detects the stroke using the electronic pen 120 in the displayable area 520 of the electronic device 110, the electronic device 110 may display the stroke in the displayable area of the electronic device 110.

In an embodiment, by using the received stroke data, the electronic device 110 may display the stroke using the electronic pen 120 in the displayable area of the electronic device 110. For example, by using the received stroke data, the electronic device 110 may display "Hello", i.e., strokes using the electronic pen 120, in the displayable area of the electronic device 110.

In an embodiment, the electronic device 110 may detect a missing stroke, which is a stroke using the electronic pen 120 on the outside 510 of the displayable area of the electronic device 110. For example, the electronic device 110 may detect that an end portion of the last letter "o" is missing in the "Hello", which is the strokes using the electronic pen.

In an embodiment, the electronic device 110 may detect a missing stroke by receiving a signal from the electronic pen 120.

In an embodiment, the electronic device 110 may detect, via a missing stroke detection mode, a missing stroke that is a stroke using the electronic pen 120 on the outside 510 of the displayable area of the electronic device 110.

In an embodiment, the electronic device 110 may obtain missing stroke data regarding the detected missing stroke. In an embodiment, the electronic device 110 may receive the missing stroke data from the electronic pen 120. In an embodiment, the electronic pen 120 may transmit the missing stroke data to the electronic device 110.

In an embodiment, the electronic device 110 may detect that a missing stroke returns to the displayable area 520 from the outside 510 of the displayable area. For example, the electronic device 110 may detect that the end portion of the "o", which is a missing stroke, returns to the displayable area 520 from the outside 510 of the displayable area.

In an embodiment, by using the stroke data, the electronic device 110 may determine whether the missing stroke returns to the displayable area 520 of the electronic device 110 from the outside 510 of the displayable area.

In an embodiment, the electronic device 110 may receive stroke data from the electronic pen 120. For example, the electronic device 110 may receive data regarding a first stroke 530 and a second stroke 540 from the electronic pen 120.

For example, the first stroke 530 may be in a direction in which it leaves the displayable area 520 towards the outside 510 of the displayable area 510. The second stroke 540 may be in a direction in which it returns to the display area 520 from the outside 510 of the displayable area 510.

In an embodiment, the first stroke 530 and the second stroke 540 may be consecutive strokes. In an embodiment, the first stroke 530 and the second stroke 540 may be overlapping or closely spaced strokes.

In an embodiment, by using the data regarding the first stroke 530 and the second stroke 540, the electronic device 110 may detect whether a missing stroke returns to the displayable area 520 of the electronic device 110 from the outside 510 of the displayable area.

In an embodiment, the electronic device 110 may determine, through pen tip location information of the electronic pen 120, whether the missing stroke returns to the displayable area 520 of the electronic device 110 from the outside 510 of the displayable area. In an embodiment, the electronic pen 120 may transmit, to the electronic device 110, the pen tip location information of the electronic pen 120.

In an embodiment, when the missing stroke returns to the displayable area 520 from the outside 510 of the displayable area, the electronic device 110 may display, in the displayable area 520 of the electronic device 110, a stroke after the stroke returns to the displayable area 520.

In an embodiment, the stroke that returns to the displayable area 520 from the outside 510 of the displayable area may take the form of a character or drawing that is truncated relative to an edge of the displayable area of the electronic device 110. For example, the last letter "o" in the strokes "Hello" may be truncated relative to the edge of the displayable area of the electronic device 110, so that only the shape of "c" may be displayed in the displayable area 520.

In an embodiment, when the electronic device 110 detects that the missing stroke returns to the displayable area 520 from the outside 510 of the displayable area, the electronic device 110 may obtain missing stroke data regarding the missing stroke that is on the outside 510 of the displayable area.

In an embodiment, the electronic pen 120 may transmit, to the electronic device 110, the missing stroke data regarding the missing stroke that is on the outside 510 of the displayable area.

In an embodiment, the electronic device 110 may obtain the missing stroke data during a time period from when the stroke goes to the outside 510 of the displayable area to when the stroke returns to the displayable area 520. In an embodiment, the electronic device 110 may stop obtaining missing stroke data from the time when the stroke returns to the displayable area 520.

In an embodiment, the electronic device 110 may receive, from the electronic pen 120, the missing stroke data during the time period from when the stroke goes to the outside 510 of the displayable area to when the stroke returns to the displayable area 520.

In an embodiment, the electronic pen 120 may transmit, to the electronic device 110, the missing stroke data during the time period from when the stroke goes to the outside 510 of the displayable area to when the stroke returns to the displayable area 520.

For example, if the end portion of the last letter "o" in the strokes "Hello" is missing, the electronic device 110 may obtain missing stroke data for the portion excluding the "c" portion that is not missing from the "o".

In an embodiment, the electronic device 110 may obtain a missing stroke by using the missing stroke data.

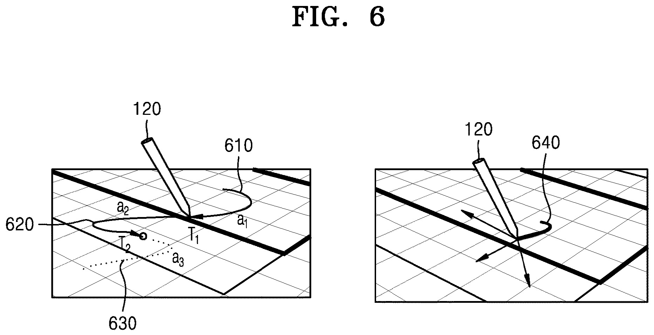

FIG. 6 is a diagram illustrating a method for obtaining missing stroke data after detecting that a missing stroke has occurred entirely outside of a displayable area, according to an embodiment.

Referring to FIG. 6, the electronic device 110 may receive stroke data related to a stroke using the electronic pen 120. In an embodiment, the electronic device 110 may receive, from the electronic pen 120, the stroke data related to the stroke generated using the electronic pen 120.

In an embodiment, by using the stroke data, the electronic device 110 may detect the stroke using the electronic pen 120 in the displayable area 520 of the electronic device 110. In an embodiment, when the electronic device 110 detects the stroke using the electronic pen 120 in the displayable area 520 of the electronic device 110, the electronic device 110 may display the stroke in the displayable area of the electronic device 110.

In an embodiment, by using the received stroke data, the electronic device 110 may display the stroke using the electronic pen 120 in the displayable area of the electronic device 110.

In an embodiment, the electronic device 110 may detect that a missing stroke does not return to the displayable area from outside the displayable area.

In an embodiment, the electronic device 110 may detect that the missing stroke has occurred entirely outside of the displayable area.

In an embodiment, when the electronic device 110 detects that the missing stroke has occurred entirely outside of the displayable area, the electronic device 110 may receive, from the electronic pen 120, data of at least one of an accelerometer and a gyroscope included in the electronic pen 120.

In an embodiment, when the missing stroke has occurred entirely outside of the displayable area, the electronic pen 120 may transmit, to the electronic device 110, data of at least one of the accelerometer and the gyroscope included in the electronic pen 120.

In an embodiment, the accelerometer may refer to a sensor capable of measuring acceleration of the electronic pen 120 along 3D coordinate axes. In an embodiment, the data of the accelerometer included in the electronic pen 120 may be data obtained by measuring acceleration of the electronic pen 120 along the 3D coordinate axes.

In an embodiment, the gyroscope may refer to a sensor capable of measuring a rotation direction, a rotation angle, and an angular velocity of the electronic pen 120 in three dimensions. In an embodiment, the data of the gyroscope included in the electronic pen 120 may be data obtained by measuring the rotation direction, rotation angle, and angular velocity of the electronic pen 120 in three dimensions.

In an embodiment, the electronic device 110 may obtain acceleration of a stroke using the electronic pen 120. For example, a first stroke 610 using the electronic pen 120 may have an acceleration of $a_1$. The first stroke 610 may be a stroke generated on the displayable area of the electronic device 110.

In an embodiment, the electronic device 110 may determine whether acceleration of the electronic pen 120 exceeds a threshold value. In an embodiment, the electronic device 110 may receive, from the electronic pen 120, data of the accelerometer included in the electronic pen 120 and determine whether the acceleration of the electronic pen 120 exceeds the threshold value.

In an embodiment, the threshold value may refer to a maximum value of an error range within which it can be determined that a stroke using the electronic pen 120 is occurring. In an embodiment, the threshold value may be a value arbitrarily set by the user.

In an embodiment, the electronic device 110 may determine whether acceleration of a stroke using the electronic pen 120 exceeds a threshold value. For example, a second stroke 620 using the electronic pen 120 may have an acceleration of $a_2$. The second stroke 620 may be a stroke that occurs outside of the displayable area of the electronic device 110.

For example, a2, which is the acceleration of the second stroke 620, may have an error range within a threshold value compared to a1 that is the acceleration of the first stroke 610. A point that separates the first stroke 610 and the second stroke 620 may be $T_1$.

In an embodiment, when the electronic device 110 determines that the acceleration of the electronic pen 120 exceeds the threshold value, the electronic device 110 may consider that a stroke using the electronic pen 120 does not occur.

In an embodiment, when the electronic device 110 determines that the acceleration of the electronic pen 120 exceeds the threshold value, the electronic device 110 may consider that the user has stopped generating a stroke using the electronic pen 120.

In an embodiment, when the electronic device 110 determines that the acceleration of the electronic pen 120 exceeds the threshold value, the electronic device 110 may stop obtaining missing stroke data. In an embodiment, when the electronic device 110 determines that the acceleration of the electronic pen 120 exceeds the threshold value, the electronic device 110 may not receive missing stroke data from the electronic pen 120.

In an embodiment, the electronic device 110 may determine whether acceleration of a stroke using the electronic pen 120 exceeds a threshold value. For example, a third stroke 630 using the electronic pen 120 may have an acceleration of $a_3$. The user may generate strokes only up to the second stroke 620 and then stop using the electronic pen 120.

For example, when the user stops using the electronic pen 120 after the second stroke 620, the acceleration $a_3$ of the third stroke 630 may have an error range that exceeds a threshold value compared to $a_1$. A point that separates the second stroke 620 and the third stroke 630 may be $T_2$.

For example, when the user stops using the electronic pen 120 after the second stroke 620, the point $T_2$ may be a starting point where the user does not generate a stroke or a point where the user stops using the electronic pen 120.

In an embodiment, the electronic device 110 may stop obtaining missing stroke data after the point $T_2$. In an embodiment, the electronic device 110 may not receive missing stroke data from the electronic pen 120 after the point $T_2$.

In an embodiment, when the electronic device 110 determines that the acceleration of the electronic pen 120 does not exceed the threshold value, the electronic device 110 may determine whether coordinates of the electronic pen 120 exceed a threshold value.

In an embodiment, even when the user stops generating a stroke, the acceleration of the electronic pen 120 may not exceed the threshold value. In an embodiment, to determine when the user stops generating a stroke, the gyroscope of the electronic pen 120 may be used to determine whether the coordinates of the electronic pen 120 exceed the threshold value.

In an embodiment, the electronic device 110 may receive, from the electronic pen 120, data of the gyroscope included in the electronic pen 120 and determine whether the coordinates of the electronic pen 120 exceed the threshold value.

In an embodiment, the electronic device 110 may determine whether a z-axis coordinate of the electronic pen 120 exceeds a threshold value. In an embodiment, the electronic device 110 may receive, from the electronic pen 120, data of the gyroscope included in the electronic pen 120 and determine whether the z-axis coordinate of the electronic pen 120 exceeds the threshold value.

In an embodiment, the electronic device 110 may obtain coordinates of a stroke made using the electronic pen 120. For example, the electronic device 110 may obtain coordinates of a fourth stroke 640 made using the electronic pen 120. The fourth stroke 640 may occur from the displayable area of the electronic device 110 to outside the displayable area.

For example, the electronic device 110 may obtain a z-axis coordinate of the fourth stroke 640. A z-axis coordinate of the fourth stroke 640 outside the displayable area may have an error range that exceeds a threshold value compared to a z-axis coordinate thereof in the displayable area.

In an embodiment, when the electronic device 110 determines that the coordinates of the electronic pen 120 exceed the threshold value, the electronic device 110 may consider that a stroke using the electronic pen 120 does not occur. In an embodiment, when the electronic device 110 determines that the z-axis coordinate of the electronic pen 120 exceeds the threshold value, the electronic device 110 may consider that a stroke using the electronic pen 120 does not occur.

In an embodiment, when it is determined that the coordinates of the electronic pen 120 exceed the threshold value, the electronic device 110 may consider that the user has stopped generating a stroke using the electronic pen 120. In an embodiment, when it is determined that the z-axis coordinate of the electronic pen 120 exceeds the threshold value, the electronic device 110 may consider that the user has stopped generating a stroke using the electronic pen 120.

In an embodiment, when the electronic device 110 determines that the coordinates of the electronic pen 120 exceed the threshold value, the electronic device 110 may stop obtaining missing stroke data. In an embodiment, when the electronic device 110 determines that the coordinates of the electronic pen 120 exceed the threshold value, the electronic device 110 may not receive missing stroke data from the electronic pen 120.

In an embodiment, when the electronic device 110 determines that the z-axis coordinate of the electronic pen 120 exceeds the threshold value, the electronic device 110 may stop obtaining missing stroke data. In an embodiment, when the electronic device 110 determines that the z-axis coordinate of the electronic pen 120 exceeds the threshold value, the electronic device 110 may not receive missing stroke data from the electronic pen 120.

For example, the electronic device 110 may stop obtaining missing stroke data from a time point when the z-axis coordinate of the fourth stroke 640 exceeds the threshold value. The electronic device 110 may not receive missing stroke data from the electronic pen 120 from the time point when the z-axis coordinate of the fourth stroke 640 exceeds the threshold value.

In an embodiment, when the electronic device 110 determines that at least one of the acceleration and the coordinates of the electronic pen 120 does not exceed the corresponding threshold value, the electronic device 110 may obtain missing stroke data. In an embodiment, when the electronic device 110 determines that the at least one of the acceleration and the coordinates of the electronic pen 120 does not exceed the corresponding threshold value, the electronic device 110 may receive missing stroke data from the electronic pen 120.

In an embodiment, when the electronic device 110 detects that the missing stroke has occurred entirely outside of the displayable area, the electronic device 110 may obtain the missing stroke data by using data from at least one of the accelerometer and the gyroscope included in the electronic pen 120 until at least one of the acceleration and the coordinates of the electronic pen 120 does not exceed the corresponding threshold value.

In an embodiment, the electronic device 110 may receive the missing stroke data from the electronic pen 120 until the at least one of the acceleration and the coordinates of the electronic pen 120 does not exceed the corresponding threshold value.

In an embodiment, the electronic pen 120 may transmit the missing stroke data to the electronic device 110 until the at least one of the acceleration and the coordinates of the electronic pen 120 does not exceed the corresponding threshold value.

In an embodiment, when the at least one of the acceleration and the coordinates of the electronic pen 120 exceeds the threshold value, the electronic device 110 may stop obtaining the missing stroke data. In an embodiment, when the at least one of the acceleration and the coordinates of the electronic pen 120 exceeds the threshold value, the electronic device 110 may consider that the user has stopped generating a stroke using the electronic pen 120.

For example, the electronic device 110 may stop obtaining missing stroke data when a stroke of the electronic pen 120 exceeds the threshold value compared to the acceleration of a1 or when a z-axis coordinate of the stroke of the electronic pen 120 exceeds the threshold value.

In an embodiment, the electronic device 110 may obtain the missing stroke data from a time point when the stroke using the electronic pen 120 leaves the displayable area of the electronic device 110 to a time point when the at least one of the acceleration and the coordinates of the electronic pen 120 exceeds the threshold value.

For example, the electronic device 110 may obtain missing stroke data from the time point when a stroke using the electronic pen 120 leaves the displayable area of the electronic device 110 to the time point when acceleration of the stroke of the electronic pen 120 exceeds the threshold value compared to the acceleration of a1 or when a z-axis coordinate of the stroke of the electronic pen 120 exceeds the threshold value.

In an embodiment, the electronic device 110 may receive, from the electronic pen 120, the missing stroke data from the time point when the stroke using the electronic pen 120 leaves the displayable area of the electronic device 110 to the time point when the at least one of the acceleration and the coordinates of the electronic pen 120 exceeds the threshold value.

In an embodiment, the electronic device 110 may transmit, to the electronic device 110, the missing stroke data from the time point when the stroke using the electronic pen 120 leaves the displayable area of the electronic device 110 to the time point when the at least one of the acceleration and the coordinates of the electronic pen 120 exceeds the threshold value.

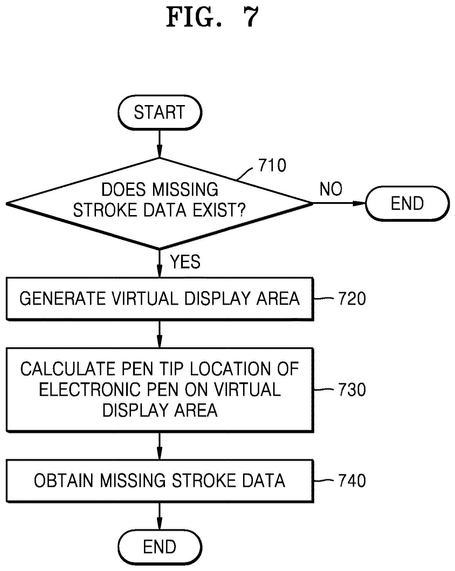

FIG. 7 is a flowchart of a method for obtaining missing stroke data, according to an embodiment.

Referring to FIG. 7, the electronic device 110 may determine whether missing stroke data exists (710). In an embodiment, the electronic device 110 may determine whether missing stroke data obtained based on a detected missing stroke exists.

In an embodiment, FIG. 7 may illustrate operations after obtaining the missing stroke data in FIG. 3.

In an embodiment, the electronic device 110 may terminate the operation when it determines that the missing stroke data does not exist. In an embodiment, the absence of missing stroke data may mean that a missing stroke is not detected.

In an embodiment, when the electronic device 110 determines that the missing stroke data exists, the electronic device 110 may consider that the missing stroke is detected.

In an embodiment, the electronic device 110 may generate a virtual display area that extends beyond the displayable area in a direction in which the missing stroke is detected (720).

In an embodiment, the virtual display area may be an arbitrary 2D plane created by extending from an edge of the display of the electronic device 110 in the direction in which the missed stroke is detected. However, the virtual display area is not limited thereto.

In an embodiment, the virtual display area may be a virtual 2D plane generated to calculate a pen tip location of the electronic pen 120. In an embodiment, the virtual display area may be a virtual 2D plane generated to obtain a missing stroke.

In an embodiment, the electronic device 110 may calculate a pen tip location of the electronic pen 120 on the virtual display area (730).

In an embodiment, the electronic device 110 may calculate the pen tip location of the electronic pen 120 on the virtual display area by using stroke data. In an embodiment, the electronic device 110 may calculate the pen tip location of the electronic pen 120 on the virtual display area by using at least one of a position (or location), a tilt, and sensor data of the electronic pen 120.

In an embodiment, the electronic device 110 may calculate the pen tip location of the electronic pen 120 on the virtual display area by receiving stroke data from the electronic pen 120. In an embodiment, the electronic device 110 may calculate the pen tip location of the electronic pen 120 on the virtual display area by receiving, from the electronic pen 120, at least one of the position, tilt, and sensor data of the electronic pen 120.

In an embodiment, the electronic pen 120 may transmit the stroke data to the electronic device 110. In an embodiment, the electronic pen 120 may transmit, to the electronic device 110, the stroke data for calculating the pen tip location of the electronic pen 120. In an embodiment, the electronic pen 120 may transmit at least one of the location (or position), tilt, and sensor data of the electronic pen 120 to the electronic device 110.

In an embodiment, the electronic device 110 may obtain missing stroke data by calculating the pen tip location of the electronic pen 120 on the virtual display area (740).

In an embodiment, the pen tip location of the electronic pen 120 on the virtual display area may be included in the missing stroke data.

In an embodiment, the electronic device 110 may obtain a missing stroke by using the missing stroke data. In an embodiment, the missing stroke may be a stroke connected by calculating the pen tip location of the electronic pen 120 on the virtual display area.

In an embodiment, by using the missing stroke data, the electronic device 110 may obtain the missing stroke connected by calculating the pen tip location of the electronic pen 120 on the virtual display area.

In an embodiment, the electronic device 110 may obtain the missing stroke by receiving the missing stroke data from the electronic pen 120. In an embodiment, the electronic pen 120 may transmit the missing stroke data to the electronic device 110.

In an embodiment, the electronic device 110 may obtain a missing stroke by calculating a pen tip location of the electronic pen 120 on the virtual display area. In an embodiment, the missing stroke may be a stroke connected by calculating the pen tip location of the electronic pen 120 on the virtual display area.

In an embodiment, the stroke connected by calculating the pen tip location of the electronic pen 120 on the virtual display area may be included in missing stroke data. In an embodiment, the obtained missing stroke may be included in the missing stroke data.

In an embodiment, the electronic device 110 may adjust a layout of the displayable area based on the missing stroke data. In an embodiment, the electronic device 110 may adjust(or relocate, resize, or re-layout) the layout of the displayable area based on the obtained missing stroke.

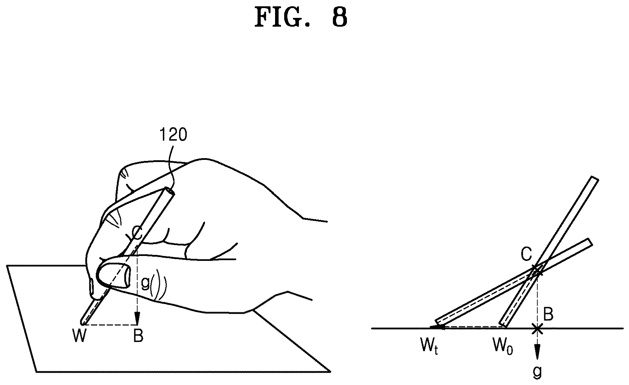

FIG. 8 is a diagram illustrating a method for calculating a pen tip location of the electronic pen 120, according to an embodiment.

Referring to FIG. 8, the electronic device 110 may obtain missing stroke data by calculating a pen tip location of the electronic pen 120. In an embodiment, the electronic device 110 may obtain a missing stroke by calculating the pen tip location of the electronic pen 120.

In an embodiment, the electronic device 110 may obtain a missing stroke by using missing stroke data. In an embodiment, the missing stroke may be a stroke connected by calculating a pen tip location of the electronic pen 120.

In an embodiment, the electronic device 110 may obtain the missing stroke by receiving the missing stroke data from the electronic pen 120. In an embodiment, the electronic device 110 may obtain the missing stroke by receiving, from the electronic pen 120, the pen tip location information of the electronic pen 120. In an embodiment, the electronic pen 120 may transmit the missing stroke data to the electronic device 110.

In an embodiment, the missing stroke data may include at least one of a location (or position) of the electronic pen 120, a tilt of the electronic pen 120, a gyroscope sensor of the electronic pen 120, an accelerometer sensor of the electronic pen 120, and position data of the user's hand.

In an embodiment, the user may generate a stroke by using the electronic pen 120. In an embodiment, it may be assumed that the user using the electronic pen 120 generates a stroke with movement of fingers and wrist rather than movement of the whole hand.

In an embodiment, a pen tip location of the electronic pen 120 may be denoted by W. In an embodiment, a fixed imaginary center point may be denoted by C. In an embodiment, it may be assumed that the user generates a stroke by rotating the electronic pen 120 based on the fixed imaginary center point C. In an embodiment, a position of C may vary depending on how the user uses the electronic pen 120.

In an embodiment, it may be assumed that the pen tip location W of the electronic pen 120 is continuously in contact with a surface of an input area, and that the electronic pen 120 moves along a line C-W.

In an embodiment, the pen tip location W of the electronic pen 120 may be assumed to move in two dimensions. In an embodiment, W may move from $W_0$ to $W_t$ while remaining in contact with the surface of the input area. In an embodiment, the position of C changes while W moves, but because there is no significant error in the movement, the position of C may be assumed to be fixed.

In an embodiment, g may represent the direction of gravity. In an embodiment, B may be a point that touches the surface of the input area while being on a straight line with C in the direction g. In an embodiment, a distance between B and C may be assumed to be a distance of the order of 5 cm. In an embodiment, the distance between B and C may vary depending on users and may not affect the determination of the position of W.

In an embodiment, the electronic device 110 may receive, from the electronic pen 120, data of an accelerometer included in the electronic pen 120. In an embodiment, the accelerometer may refer to a sensor capable of measuring acceleration of the electronic pen 120 along 3D coordinate axes. In an embodiment, the data of the accelerometer included in the electronic pen 120 may be data obtained by measuring acceleration of the electronic pen 120 along the 3D coordinate axes.

In an embodiment, the data of the accelerometer may have a value of $a = (a_x, a_y, a_z)$. In an embodiment, when the user holds the electronic pen 120 and does not move, the accelerometer may measure gravitational acceleration. In an embodiment, the gravitational acceleration may have a value of $g = (g_x, g_y, g_z)$.

According to an embodiment, the electronic pen 120 may rotate according to gravity. In an embodiment, the accelerometer may adjust the value a of the measured acceleration to $a' = (a'_x, a'_y, a'_z)$ according to gravity. In an embodiment, $a'_z$ may be in an opposite direction to gravity. In an embodiment, $a'_x$ and $a'_y$ may have directions parallel to the surface of the input area. In an embodiment, the accelerometer may remove the effect of g by removing a z component after the rotation.

In an embodiment, an imaginary starting point on the surface of the input area may be $(x_0, y_0)$. In an embodiment, a point after substituting N sensor data measurement values may be $(x_N, y_N)$. In an embodiment, $(x_N, y_N)$ may be expressed via the following Equation.

[Equation 1]

$$(x_N, y_N) = (x_0, y_0) + \sum_{n=1}^{N} \Delta t_n (v_{nx}, v_{ny})$$

In an embodiment, $(v_{nx}, v_{ny})$ may be expressed via the following Equation.

[Equation 2]

$$(v_{nx}, v_{ny}) = (0, 0) + \sum_{i=1}^{n} \Delta t_i (a'_{ix}, a'_{iy}).$$

In an embodiment, $\Delta t_n$ may represent a time interval between n-1 and n measurements.

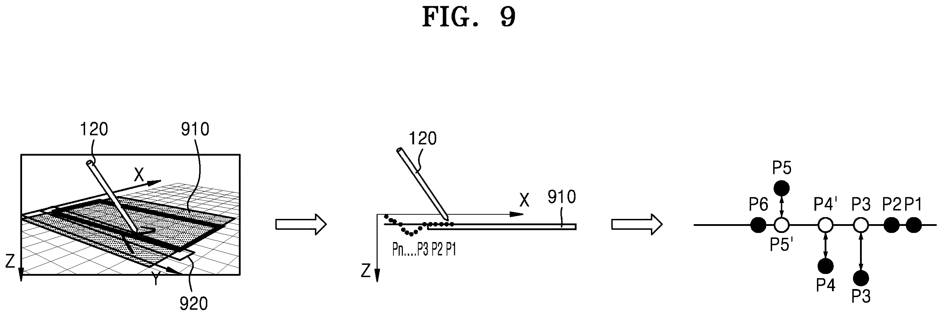

FIG. 9 is a diagram illustrating a method for calculating a pen tip location of the electronic pen 120 on a virtual display area 920, according to an embodiment.

Referring to FIG. 9, the electronic device 110 may receive stroke data related to a stroke using the electronic pen 120. In an embodiment, by using the received stroke data, the electronic device 110 may display the stroke using the electronic pen 120 in a displayable area 910 of the electronic device 110.

In an embodiment, the electronic device 110 may detect a missing stroke, which is a stroke using the electronic pen 120 outside of the displayable area 910 of the electronic device 110.

In an embodiment, the electronic device 110 may generate a virtual display area 920 which extends beyond the displayable area 910 in a direction in which the missing stroke is detected.

In an embodiment, the virtual display area 920 may be an arbitrary 2D plane created by extending from an edge of the display of the electronic device 110 in the direction in which the missed stroke is detected. However, the virtual display area 920 is not limited thereto.

In an embodiment, the virtual display area 920 may be a virtual 2D plane generated to calculate a pen tip location of the electronic pen 120. In an embodiment, the virtual display area 920 may be a virtual 2D plane generated to obtain a missing stroke.

In an embodiment, the electronic device 110 may calculate a pen tip location of the electronic pen 120 on the virtual display area 920.

In an embodiment, the electronic device 110 may calculate the pen tip location of the electronic pen 120 on the virtual display area 920 by using stroke data. In an embodiment, the electronic device 110 may calculate the pen tip location of the electronic pen 120 on the virtual display area 920 by using at least one of a location, a tilt, and sensor data of the electronic pen 120.

In an embodiment, the electronic device 110 may calculate the pen tip location of the electronic pen 120 on the virtual display area 920 by receiving stroke data from the electronic pen 120. In an embodiment, the electronic device 110 may calculate the pen tip location of the electronic pen 120 on the virtual display area 920 by receiving, from the electronic pen 120, at least one of the location, tilt, and sensor data of the electronic pen 120.

In an embodiment, the electronic pen 120 may transmit the stroke data to the electronic device 110. In an embodiment, the electronic pen 120 may transmit, to the electronic device 110, the stroke data for calculating a pen tip location of the electronic pen 120. In an embodiment, the electronic pen 120 may transmit at least one of the location, tilt, and sensor data of the electronic pen 120 to the electronic device 110.

In an embodiment, the pen tip location of the electronic pen 120 may be represented by P1, P2, P3, ..., and Pn. In an embodiment, P1, P2, P3, ... and Pn may be the pen tip location of the electronic pen 120 calculated at regular time intervals. In an embodiment, a direction of use of (or writing with) the electronic pen 120 may be a direction from P1 to Pn.

In an embodiment, the pen tip location of the electronic pen 120 on the displayable area 910 of the electronic device 110 may be P1 and P2. In an embodiment, the pen tip location of the electronic pen 120 on the virtual display area 920 may be P3, P4, P5, and P6.

In an embodiment, the pen tip location of the electronic pen 120 on the virtual display area 920 may have different heights. In an embodiment, the pen tip location of the electronic pen 120 on the virtual display area 920 may have different z-axis coordinates.

In an embodiment, P1, P2, and P6 may all have the same height. In an embodiment, P1, P2, and P6 may all have the same z-axis coordinate. In an embodiment, P1, P2, and P6 may have the same z-axis coordinate as a surface of the displayable area 910 of the electronic device 110.

In an embodiment, P3, P4, and P5 may have different heights. In an embodiment, P3, P4, and P5 may have different z-axis coordinates. In an embodiment, P3, P4, and P5 may have different z-axis coordinates from the surface of the displayable area 910 of the electronic device 110.

In an embodiment, when a z-axis coordinate of a pen tip location of the electronic pen 120 on the virtual display area 920 is different from a z-axis coordinate of the surface of the displayable area 910 of the electronic device 110, the electronic device 110 may adjust the z-axis coordinate of the pen tip location of the electronic pen 120 on the virtual display area 920 to be the same as the z-axis coordinate of the surface of the displayable area 910 of the electronic device 110.

In an embodiment, when a height of a pen tip location of the electronic pen 120 on the virtual display area 920 is different from a height of a plane of the displayable area 910 of the electronic device 110, the electronic device 110 may adjust the height of the pen tip location of the electronic pen 120 on the virtual display area 920 to be equal to the height of the surface of the displayable area 910 of the electronic device 110.

In an embodiment, the electronic device 110 may adjust the z-axis coordinates of P3, P4, and P5 to be the same as the z-axis coordinate of P0, P1, and P6. In an embodiment, the electronic device 110 may adjust the heights of P3, P4, and P5 to be equal to the height of P0, P1, and P6.

In an embodiment, P3, P4, and P5 with the adjusted z-axis coordinate may be adjusted to P3', P4', and P5'. In an embodiment, P3, P4, and P5 of the adjusted height may be adjusted to P3', P4', and P5'.

In an embodiment, the electronic device 110 may obtain a missing stroke by connecting the pen tip location of the electronic pen 120. In an embodiment, the electronic device 110 may obtain a missing stroke by connecting P1, P2, P3', P4', P5', and P6.

In an embodiment, the electronic device 110 may obtain missing stroke data by calculating the pen tip location of the electronic pen 120 on the virtual display area 920.

In an embodiment, the pen tip location of the electronic pen 120 on the virtual display area 920 may be included in the missing stroke data.

In an embodiment, the electronic device 110 may obtain a missing stroke by using the missing stroke data. In an embodiment, the missing stroke may be a stroke connected by calculating the pen tip location of the electronic pen 120 on the virtual display area 920.

In an embodiment, by using the missing stroke data, the electronic device 110 may obtain the missing stroke connected by calculating the pen tip location of the electronic pen 120 on the virtual display area 920.

In an embodiment, the electronic device 110 may obtain the missing stroke by receiving the missing stroke data from the electronic pen 120. In an embodiment, the electronic pen 120 may transmit the missing stroke data to the electronic device 110.

In an embodiment, the electronic device 110 may obtain a missing stroke by calculating a pen tip location of the electronic pen 120 on the virtual display area 920.

In an embodiment, the stroke connected by calculating the pen tip location of the electronic pen 120 on the virtual display area 920 may be included in the missing stroke data. In an embodiment, the obtained missing strokes may be included in the missing stroke data.

In an embodiment, the electronic device 110 may adjust a layout of the displayable area 910 based on the missing stroke data. In an embodiment, the electronic device 110 may adjust the layout of the displayable area 910 based on the obtained missing stroke.

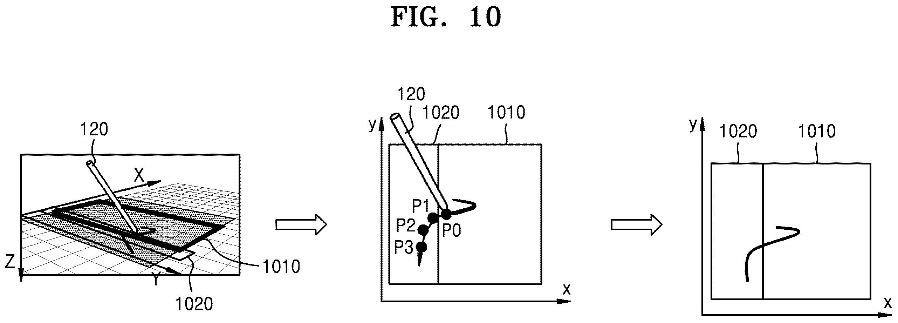

FIG. 10 is a diagram illustrating a method for calculating a pen tip location of the electronic pen 120 in a virtual display area 1020, according to an embodiment.

Referring to FIG. 10, the electronic device 110 may receive stroke data related to a stroke using the electronic pen 120. In an embodiment, by using the received stroke data, the electronic device 110 may display the stroke using the electronic pen 120 in a displayable area 1010 of the electronic device 110.

In an embodiment, the electronic device 110 may detect a missing stroke, which is a stroke using the electronic pen 120 outside of the displayable area 1010 of the electronic device 110.

In an embodiment, the electronic device 110 may generate a virtual display area 1020 which extends beyond the displayable area 1010 in a direction in which the missing stroke is detected.

In an embodiment, the virtual display area 1020 may be an arbitrary 2D plane created by extending from an edge of the display of the electronic device 110 in the direction in which the missed stroke is detected. However, the virtual display area 1020 is not limited thereto.

In an embodiment, the virtual display area 1020 may be a virtual 2D plane generated to calculate a pen tip location of the electronic pen 120. In an embodiment, the virtual display area 1020 may be a virtual 2D plane generated to obtain a missing stroke.

In an embodiment, the electronic device 110 may calculate a pen tip location of the electronic pen 120 on the virtual display area 1020.

In an embodiment, the pen tip location of the electronic pen 120 may be represented by P0, P1, P2, ..., and Pn. In an embodiment, P0, P1, P2, ... and Pn may be the pen tip location of the electronic pen 120 calculated at regular time intervals. In an embodiment, a direction of use of the electronic pen 120 is a direction from P0 to Pn.

In an embodiment, a pen tip location of the electronic pen 120 on the displayable area 1010 of the electronic device 110 may be P0. In an embodiment, P0 may be the pen tip location of the electronic pen 120 on the displayable area 1010 immediately before the missing stroke occurs.

In an embodiment, the pen tip location of the electronic pen 120 on the virtual display area 1020 may be P1, P2, and P3. In an embodiment, P1, P2, and P3 may be points adjusted to have a height equal to a height of the surface of the displayable area 1010 of the electronic device 110. In an embodiment, P1, P2, and P3 may be points adjusted to have the same z-axis coordinate as a z-axis coordinate of the surface of the displayable area 1010 of the electronic device 110.

In an embodiment, the electronic device 110 may obtain a missing stroke by connecting the pen tip location of the electronic pen 120. In an embodiment, the electronic device 110 may obtain a missing stroke by connecting P0, P1, P2, and P3.

In an embodiment, the electronic device 110 may adjust a layout of the displayable area 1010 based on the obtained missing stroke.

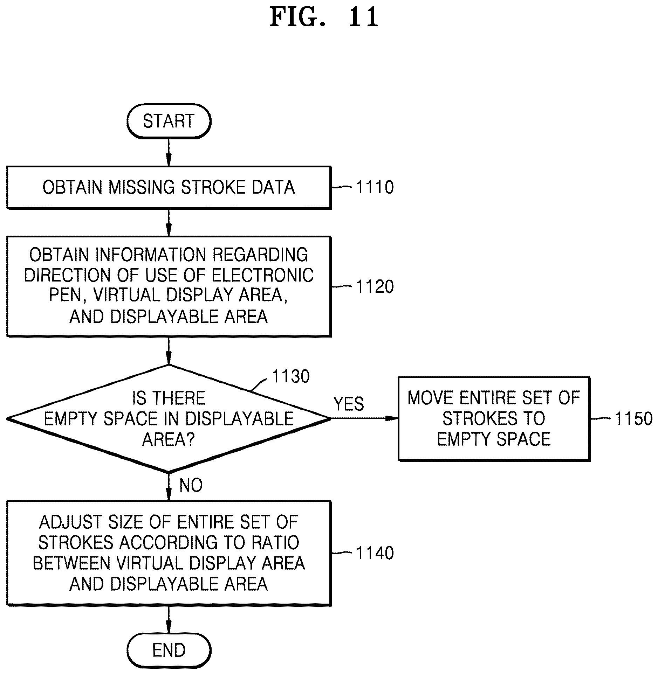

FIG. 11 is a flowchart of a method for adjusting a layout of a displayable area of the electronic device 110, according to an embodiment.

Referring to FIG. 11, the electronic device 110 may obtain missing stroke data regarding a detected missing stroke (1110). Because the method for obtaining missing stroke data has been described with reference to FIGS. 3 and 7, a description thereof is omitted.

In an embodiment, FIG. 11 may illustrate operations performed after the operations of FIG. 7.

In an embodiment, the electronic device 110 may adjust (or resize, relocate, or re-layout) a layout of the displayable area based on the missing stroke data.

In an embodiment, the electronic device 110 may adjust the layout of the displayable area so that a missing stroke obtained using the missing stroke data may be displayed in the displayable area of the electronic device 110.

In an embodiment, the electronic device 110 may obtain information about a direction of use of the electronic pen 120, a virtual display area, and the displayable area of the electronic device 110 (1120).

In an embodiment, the electronic device 110 may obtain the information about the direction of use of the electronic pen 120, the virtual display area, and the displayable area by using the missing stroke data.

In an embodiment, the direction of use of (or writing with) the electronic pen 120 may indicate a direction in which the user generates a stroke using the electronic pen 120. For example, if the user is right-handed, the direction of use of the electronic pen 120 may be from left to right.

In an embodiment, the information about the virtual display area may include information about a size of the virtual display area including a missing stroke. In an embodiment, the information about the virtual display area may indicate a minimum size of the virtual display area capable of including the missing stroke.

In an embodiment, the information about the displayable area may include information about a size of the displayable area. In an embodiment, the information about the displayable area may include information about a size of an area in which strokes using the electronic pen 120 are displayed. In an embodiment, the information about the displayable area may include a minimum size of an area that includes strokes using the electronic pen 120. For example, the size of the displayable area may indicate a size of an input area for S-Note among applications installed on Samsung smartphones.

In an embodiment, the electronic device 110 may receive, from the electronic pen 120, the information about the direction of use of the electronic pen 120, the virtual display area, and the displayable area. In an embodiment, the electronic pen 120 may transmit, to the electronic device 110, the information about the direction of use of the electronic pen 120, the virtual display area, and the displayable area.

In an embodiment, the electronic device 110 may determine whether there is an empty space in the displayable area, based on at least one of the direction of use of the electronic pen 120, the virtual display area, and the displayable area (1130).

In an embodiment, the electronic device 110 may use the missing stroke data to determine whether there is an empty space in the displayable area.

In an embodiment, an empty space may refer to a blank space (or blank area) in the displayable area in a direction opposite to the direction of use of the electronic pen 120. In an embodiment, the empty space may refer to a space obtained by excluding a size of an area including strokes made using the electronic pen 120 from the size of the displayable area.

In an embodiment, the electronic device 110 may determine whether an empty space exists by comparing a size of the virtual display area including the missing stroke with a size of the empty space.

In an embodiment, the electronic device 110 may determine that an empty space exists only when the size of the virtual display area including the missing stroke is less than that of the empty space.

In an embodiment, the electronic device 110 may determine that an empty space exists only when the size of the missing stroke is less than that of the empty space such that the missing stroke may be included in the empty space.

In an embodiment, the electronic device 110 may determine that an empty space does not exist when the size of the virtual display area including the missing stroke is greater than that of the empty space.

In an embodiment, the electronic device 110 may determine that an empty space does not exist when the size of the missing stroke is greater than that of the empty space.

In an embodiment, when there is an empty space in the displayable area based on at least one of the direction of use of the electronic pen 120, the virtual display area, and the displayable area, the electronic device 110 may move an entire set of strokes(or whole strokes) to the empty space (1150).

In an embodiment, the entire set of strokes may refer to strokes using the electronic pen 120 displayed in the displayable area of the electronic device 110. In an embodiment, the entire set of strokes may not include a missing stroke.

In an embodiment, the electronic device 110 may move the entire set of strokes to the empty space by the size of the virtual display area including the missing stroke. In an embodiment, the electronic device 110 may move the entire set of strokes to the empty space by an amount corresponding to the size of the missing stroke.

In an embodiment, the electronic device 110 may move the entire set of strokes to an edge of the displayable area in the direction of the empty space.

In an embodiment, the electronic device 110 may move the entire set of strokes by a distance corresponding to one of the size of the missing stroke and the size of the empty space.

In an embodiment, the electronic device 110 may adjust a layout of the displayable area by moving the entire set of strokes to the empty space.

In an embodiment, the electronic device 110 may display the missing stroke in the displayable area according to the adjusted layout.

In an embodiment, the electronic device 110 may display the missing stroke by connecting it to the entire set of strokes according to the layout where the entire set of strokes is moved to the empty space.

In an embodiment, the missing stroke may be displayed so that it is connected to the entire set of strokes to complete a single letter(or text) or drawing. **In** an embodiment, the missing stroke may be added to and connected to a missing portion in the entire set of strokes.

In an embodiment, when there is no empty space in the displayable area, the electronic device 110 may adjust a size of the entire set of strokes according to a ratio between the virtual display area and the displayable area (1140).

In an embodiment, the ratio between the virtual display area and the displayable area may mean a reduction ratio that allows the missing stroke to be displayed in the displayable area.

In an embodiment, the ratio between the virtual display area and the displayable area may mean a value of the size of the displayable area divided by the value of the size of the displayable area plus a value of the size of the virtual display area including the missing stroke.

In an embodiment, the electronic device 110 may reduce the size of the entire set of strokes according to the ratio between the virtual display area and the displayable area.

In an embodiment, the electronic device 110 may adjust the layout of the displayable area by reducing the size of the entire set of strokes according to the ratio between the virtual display area and the displayable area.

In an embodiment, the electronic device 110 may display the missing stroke in the displayable area according to the adjusted layout.

In an embodiment, the electronic device 110 may display the missing stroke by connecting it to the entire set of strokes according to the layout in which the size of the entire set of strokes is reduced according to the ratio between the virtual display area and the displayable area.

In an embodiment, the electronic device 110 may reduce the size of the missing stroke according to the ratio between the virtual display area and the displayable area. **In** an embodiment, the electronic device 110 may display the reduced missing stroke by connecting it to the reduced entire set of strokes.

In an embodiment, the missing stroke may be displayed so that it is connected to the entire set of strokes to complete a single letter (or text) or drawing. In an embodiment, the missing stroke may be added to and connected to a missing portion in the entire set of strokes.

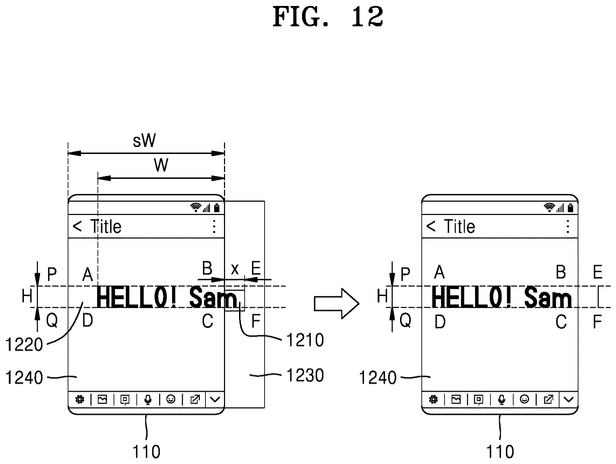

FIG. 12 is a diagram illustrating a method for moving an entire set of strokes to an empty space 1220, according to an embodiment.

Referring to FIG. 12, the electronic device 110 may receive stroke data related to a stroke using the electronic pen 120. In an embodiment, by using the received stroke data, the electronic device 110 may display the stroke using the electronic pen 120 in a displayable area 1240 of the electronic device 110.

In an embodiment, the strokes using the electronic pen 120 may be "HELLO! Sam". In an embodiment, "HELLO! Sam", which is a set of strokes using the electronic pen 120, may be displayed in the displayable area 1240 of the electronic device 110.

In an embodiment, the electronic device 110 may detect a missing stroke 1210, which is a stroke made using the electronic pen 120 outside of the displayable area 1240 of the electronic device 110. In an embodiment, the missing stroke 1210 may be an end portion of the last letter 'm' in "HELLO! Sam," which is the set of strokes using the electronic pen 120.

In an embodiment, the electronic device 110 may obtain missing stroke data regarding the detected missing stroke 1210.

In an embodiment, the missing stroke data may include at least one of pen tip location data, accelerometer data, gyroscope data, magnetometer data, tilt data, time data, sensor data, and direction data of the electronic pen 120. However, the missing stroke data is not limited thereto.

In an embodiment, the electronic device 110 may adjust a layout of the displayable area 1240 based on the missing stroke data.

In an embodiment, a horizontal width of the strokes using the electronic pen 120 may be denoted by W. In an embodiment, W may represent a distance from a point where the strokes made using the electronic pen 120 start to an end of an opposite edge of the displayable area 1240 . In an embodiment, W may represent a distance between A and B or a distance between C and D.

In an embodiment, a horizontal length of the displayable area 1240 may be denoted by sW. In an embodiment, sW may represent a distance from an end of one edge of the displayable area 1240 to an end of the opposite edge thereof. In an embodiment, sW may represent a distance from P to B or a distance from Q to C.

In an embodiment, a vertical height of the strokes using the electronic pen 120 may be denoted by H. In an embodiment, H may represent a distance from P to Q, a distance from A to D, a distance from B to C, or a distance from E to F.

In an embodiment, A, B, C, and D may represent vertices of a rectangle including the strokes displayed in the displayable area 1240.

In an embodiment, P may represent a point where a straight line connecting A and B meets an end of an edge of the displayable area 1240. In an embodiment, Q may represent a point where a straight line connecting C and D meets an end of the edge of the displayable area 1240.

In an embodiment, E may represent an upper right vertex of a rectangle containing the missing stroke 1210. In an embodiment, F may represent a lower right vertex of the rectangle containing the missing stroke 1210.

In an embodiment, the electronic device 110 may determine whether there is an empty space 1220 in the displayable area 1240, based on at least one of a direction of use of the electronic pen 120, a virtual display area 1230, and the displayable area 1240.

In an embodiment, the empty space 1220 may refer to a blank space in the displayable area 1240 in a direction opposite to the direction of use of the electronic pen 120. In an embodiment, the empty space may refer to a space obtained by excluding a size of an area including the strokes using the electronic pen 120 from a size of the displayable area 1240. In an embodiment, the empty space 1220 may be a rectangular PADQ region.

In an embodiment, the electronic device 110 may determine whether there is an empty space 1220 by comparing a size of the virtual display area 1230 including the missing stroke 1210 with a size of the empty space 1220.

In an embodiment, the virtual display area 1230 including the missing stroke 1210 may be a rectangular BEFC area. In an embodiment, the size of the virtual display area 1230 including the missing stroke 1210 may be represented by x. In an embodiment, x may represent a distance from B to E or a distance from C to F. In an embodiment, x may represent a size of the missing stroke 1210.

In an embodiment, the size of the empty space 1220 may mean a distance from P to A or a distance from Q to D. In an embodiment, the size of the empty space 1220 may mean a value obtained by subtracting W from sW.

In an embodiment, the electronic device 110 may determine whether the empty space 1220 exists by comparing x with the distance from P to A. In an embodiment, the electronic device 110 may determine whether the empty space 1220 exists by comparing x with the distance from Q to D.

In an embodiment, when x is less than the distance from P to A, it may be determined that the empty space 1220 exists. In an embodiment, when x is less than the distance from Q to D, it may be determined that the empty space 1220 exists.

In an embodiment, when x is greater than the distance from P to A, it may be determined that the empty space 1220 does not exist. In an embodiment, when x is greater than the distance from Q to D, it may be determined that the empty space 1220 does not exist.

In an embodiment, when the empty space 1220 is present in the displayable area 1240 based on at least one of the direction of use of the electronic pen 120, the virtual display area 1230, and the displayable area 1240, the electronic device 110 may move the entire set of strokes to the empty space 1220.

In an embodiment, the entire set of strokes may mean a portion excluding the missing stroke 1210 from "HELLO! Sam".

In an embodiment, the electronic device 110 may move the entire set of strokes by x. In an embodiment, the electronic device 110 may move the entire set of strokes by the distance from P to A. In an embodiment, the electronic device 110 may move the entire set of strokes by the distance from Q to D. In an embodiment, the electronic device 110 may move the entire set of strokes by a distance equal to sW minus W.

In an embodiment, the electronic device 110 may move the entire set of strokes by one of x and the distance from P to A.

In an embodiment, the electronic device 110 may move the entire set of strokes so that the missing stroke 1210 may be included in the displayable area 1240 of the electronic device 110.

In an embodiment, the electronic device 110 may adjust a layout of the displayable area 1240 by moving the entire set of strokes to the empty space 1220.

In an embodiment, the electronic device 110 may display the missing stroke 1210 in the displayable area 1240 according to the adjusted layout.

In an embodiment, the electronic device 110 may display the missing stroke 1210 by connecting it to the entire set of strokes according to the layout where the entire set of strokes have been moved to the empty space .

In an embodiment, the end portion of the last letter 'm' in "HELLO! Sam" may be displayed by connecting it to the "HELLO! Sam" that has been moved to the empty space 1220.

In an embodiment, the missing stroke 1210 may be displayed so that it is connected to the entire set of strokes to complete a single letter (or text) or drawing. In an embodiment, the missing stroke 1210 may be added to and connected to a missing portion in the entire set of strokes.

In an embodiment, before adjusting the layout of the displayable area 1240, the electronic device 110 may connect the missing stroke 1210 to the entire set of strokes to complete the entire letter (or text) or drawing.

In an embodiment, the electronic device 110 may move the completed entire letter or drawing to the empty space 1220 according to the adjusted layout.

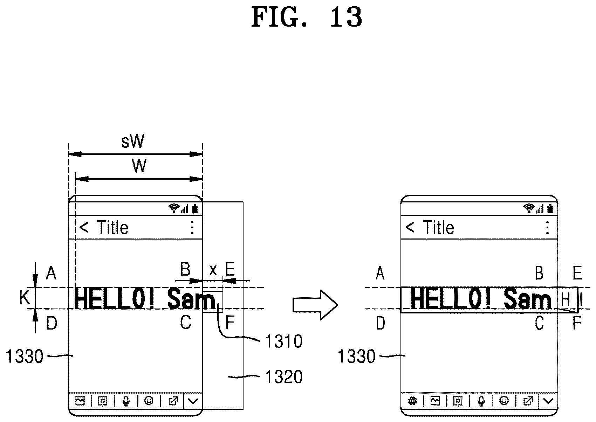

FIG. 13 is a diagram illustrating a method for adjusting a size of an entire set of strokes according to a ratio between a virtual display area 1320 and a displayable area 1330, according to an embodiment.

Referring to FIG. 13, the electronic device 110 may receive stroke data related to a stroke using the electronic pen 120. In an embodiment, by using the received stroke data, the electronic device 110 may display the stroke using the electronic pen 120 in the displayable area 1330 of the electronic device 110.

In an embodiment, the stroke using the electronic pen 120 may be "HELLO! Sam". In an embodiment, "HELLO! Sam", which is a set of strokes using the electronic pen 120, may be displayed in the displayable area 1330 of the electronic device 110.

In an embodiment, the electronic device 110 may detect a missing stroke 1310, which is a stroke made using the electronic pen 120 outside of the displayable area 1330 of the electronic device 110. In an embodiment, the missing stroke 1310 may be an end portion of the last letter 'm' in "HELLO! Sam," which is the set of strokes using the electronic pen 120.

In an embodiment, the electronic device 110 may obtain missing stroke data regarding the detected missing stroke 1310.

In an embodiment, the missing stroke data may include at least one of pen tip location data, accelerometer data, gyroscope data, magnetometer data, tilt data, time data, sensor data, and direction data of the electronic pen 120. However, the missing stroke data is not limited thereto.

In an embodiment, the electronic device 110 may adjust a layout of the displayable area 1330 based on the missing stroke data.

In an embodiment, a horizontal width of the strokes using the electronic pen 120 may be denoted by W. In an embodiment, W may represent a distance from a point where the strokes using the electronic pen 120 start to an end of an opposite edge of the displayable area 1330. In an embodiment, W may represent a distance from A to B or a distance from C to D.

In an embodiment, a horizontal length of the displayable area 1330 may be denoted by sW. In an embodiment, sW may represent a distance from an end of one edge of the displayable area 1330 to an end of the opposite edge thereof.

In an embodiment, a vertical height of the strokes using the electronic pen 120 may be denoted by K. In an embodiment, K may represent a distance from A to D, a distance from B to C, or a distance from E to F.

In an embodiment, A, B, C, and D may represent vertices of a rectangle including the strokes displayed in the displayable area 1330.

In an embodiment, E may represent an upper right vertex of a rectangle containing the missing stroke 1310. In an embodiment, F may represent a lower right vertex of the rectangle containing the missing stroke 1310.

In an embodiment, the virtual display area 1320 including the missing stroke 1310 may be a rectangular BEFC area. In an embodiment, a size of the virtual display area 1320 including the missing stroke 1310 may be represented by x. In an embodiment, x may represent a distance from B to E or a distance from C to F. In an embodiment, x may represent a size of the missing stroke 1310.

In an embodiment, the electronic device 110 may determine whether there is an empty space in the displayable area 1330, based on at least one of a direction of use of the electronic pen 120, the virtual display area 1320, and the displayable area 1330.

In an embodiment, when there is no empty space in the displayable area 1330, the electronic device 110 may adjust a size of the entire set of strokes according to a ratio between the virtual display area 1320 and the displayable area 1330.

In an embodiment, the ratio between the virtual display area 1320 and the displayable area 1330 may mean a reduction ratio that allows the missing stroke 1310 to be displayed in the displayable area 1330.

In an embodiment, the ratio between the virtual display area 1320 and the displayable area 1330 may mean a value of a size of the displayable area 1330 divided by the value of the size of the displayable area 1330 plus a value of the size of the virtual display area 1320 including the missing stroke 1310.

In an embodiment, the ratio between the virtual display area 1320 and the displayable area 1330 may mean the distance from A to B divided by a distance from A to E. In an embodiment, the distance from A to B may be W. In an embodiment, the distance from A to E may be W plus x.

In an embodiment, the ratio between the virtual display area 1320 and the displayable area 1330 may be expressed as $\dfrac{W}{W + x}$ .

In an embodiment, the electronic device 110 may reduce the size of the entire set of strokes according to the ratio between the virtual display area 1320 and the displayable area 1330.

In an embodiment, the size of the entire set of strokes may be represented by y. In an embodiment, a size of the entire set of strokes reduced according to the ratio between the virtual display area 1320 and the displayable area 1330 may be expressed as $y \times \dfrac{W}{W + x}$ .

In an embodiment, a lower right vertex of a rectangle containing the entire set of strokes of the reduced size may be represented by H. In an embodiment, when a line is connected from H to be perpendicular to a line segment EF, a point at which the line intersects the line segment EF at a right angle may be denoted by I.

In an embodiment, a length of a line segment HB may be a value obtained by multiplying K by the ratio between the virtual display area 1320 and the displayable area 1330. In an embodiment, the length of the line segment HB may be expressed as $K \times \dfrac{W}{W+x}$.

In an embodiment, a size of angle HFC may be expressed as $arctan\dfrac{HC}{CF}$. In an embodiment, the size of the entire set of strokes may be adjusted by moving F to H at an angle of $arctan\dfrac{HC}{CF}$.

In an embodiment, the electronic device 110 may adjust the layout of the displayable area 1330 by reducing the size of the entire set of strokes according to the ratio between the virtual display area 1320 and the displayable area 1330.

In an embodiment, the electronic device 110 may display the missing stroke 1310 in the displayable area 1330 according to the adjusted layout.

In an embodiment, the electronic device 110 may display the missing stroke 1310 by connecting it to the entire set of strokes according to the layout in which the size of the entire set of strokes is reduced according to the ratio between the virtual display area 1320 and the displayable area 1330.

In an embodiment, the electronic device 110 may reduce the size of the missing stroke 1310 according to the ratio between the virtual display area 1320 and the displayable area 1330. In an embodiment, the electronic device 110 may display the reduced missing stroke by connecting it to the reduced entire set of strokes.

In an embodiment, the end portion of the last letter "m" of "HELLO! Sam" may be reduced according to the ratio between the virtual display area 1320 and the displayable area 1330. In an embodiment, the reduced end portion of the last letter "m" of the reduced "HELLO! Sam" may be displayed by connecting it to the reduced entire set of strokes.

In an embodiment, the missing stroke 1310 may be displayed so that it is connected to the entire set of strokes to complete a single letter or drawing. In an embodiment, the missing stroke 1310 may be added to and connected to a missing portion in the entire set of strokes.

In an embodiment, before adjusting the layout of the displayable area 1330, the electronic device 110 may connect the missing stroke 1310 to the entire set of strokes to complete the entire letter or drawing.

In an embodiment, the electronic device 110 may reduce the completed entire letter or drawing according to the ratio between the virtual display area 1320 and the displayable area 1330.

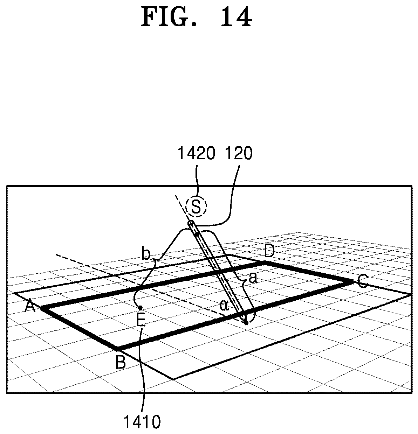

FIG. 14 is a diagram illustrating a method for calculating a pen tip location of the electronic pen 120 by using ta location of beacons 1410 and 1420, according to an embodiment.

Referring to FIG. 14, the electronic device 110 may detect a missing stroke, which is a stroke using the electronic pen 120 outside of a displayable area of the electronic device 110.

In an embodiment, the electronic device 110 may generate a virtual display area that extends beyond the displayable area in a direction in which the missing stroke is detected.

In an embodiment, the electronic device 110 may calculate a pen tip location of the electronic pen 120 on the virtual display area. In an embodiment, the electronic device 110 may calculate the pen tip location of the electronic pen 120 on the virtual display area by using stroke data.

In an embodiment, the electronic device 110 may obtain missing stroke data by calculating the pen tip location of the electronic pen 120 on the virtual display area.

In an embodiment, the missing stroke data may include at least one of pen tip location data, accelerometer data, gyroscope data, magnetometer data, tilt data, time data, sensor data, and direction data of the electronic pen 120. However, the missing stroke data is not limited thereto.

In an embodiment, the missing stroke data may include location (or position) data of the beacon 1410 included in the electronic device 110 or location data of the beacon 1420 included in the electronic pen 120.

In an embodiment, the beacons 1410 and 1420 are short-range wireless communication devices based on Bluetooth Low Energy (BLE) protocol, and may be devices used to transmit information about a specific location. In an embodiment, the beacons 1410 and 1420 may be respectively included in the electronic device 110 and the electronic pen 120.

In an embodiment, the electronic device 110 may obtain pen tip location (or position) information of the electronic pen 120 by using a location (or position) of the beacon 1410 included in the electronic device 110 and a location of the beacon 1420 included in the electronic pen 120.

In an embodiment, the electronic device 110 may receive, from the electronic pen 120, location information of the beacon 1420 included in the electronic pen 120. In an embodiment, the electronic pen 120 may transmit, to the electronic device 110, the location information of the beacon 1420 included in the electronic pen 120.

In an embodiment, vertices of the displayable area of the electronic device 110 may be A, B, C, and D. In an embodiment, the location of the beacon 1410 included in the electronic device 110 may be E. In an embodiment, the location of the beacon 1420 included in the electronic device 110 may be S.

In an embodiment, a distance from the location of the beacon 1420 included in the electronic pen 120 to a pen tip of the electronic pen 120 may be a. In an embodiment, a distance from the location of the beacon 1420 included in the electronic pen 120 to the location of the beacon 1410 included in the electronic device 110 may be b.

In an embodiment, a signal strength of the beacon 1410 or 1420 measured by a receiver may be represented by a Received Signal Strength Indicator (RSSI). In an embodiment, RSSI may be affected by a distance and transmit power. In an embodiment, the RSSI may be used to estimate a distance between the receiver and the beacon 1410 or 1420.

In an embodiment, the power measured by the receiver may be represented by Measured Power. In an embodiment, the Measured Power may be used in combination with the RSSI to estimate the distance between the receiver and the beacon 1410 or 1420.

In an embodiment, a or b may be represented by Distance. In an embodiment, Distance may be expressed via the following Equation.

[Equation 3]

$$\text{Distance} = 10 \wedge ((\text{Measured Power} - \text{RSSI})/(10 * N))$$

In an embodiment, N may be a constant determined by an environmental factor. In an embodiment, N may have a value between 2 and 4 depending on environmental factors.

In an embodiment, a tilt angle between the electronic pen 120 and a plane of the displayable area of the electronic device 110 may be $\alpha$.

In an embodiment, the electronic device 110 may calculate $\alpha$ by using data of a gyroscope included in the electronic pen 120.

In an embodiment, the data of the gyroscope included in the electronic pen 120 may be data obtained by measuring a rotation direction, a rotation angle, and an angular velocity of the electronic pen 120 in three dimensions.

In an embodiment, the data of the gyroscope may have a value of angular velocity $r = (r_x, r_y, r_z)$. In an embodiment, an initial attitude of the electronic pen 120 may be represented by $o_1 = (o_{1x}, o_{1y}, o_{1z})$. In an embodiment, $o_1$ may be a value that takes into account gravity in a stationary state measured by using an accelerometer included in the electronic pen 120.

In an embodiment, as the electronic pen 120 rotates, the initial attitude may be updated using data of the gyroscope included in the electronic pen 120. In an embodiment, when $o_1$ rotates at the angular velocity r for a time period $\Delta_t$, a rotation angle may be expressed as $Q(\Delta_t \cdot r)$. In an embodiment, an updated attitude $o_2$ may be expressed via the following Equation.

[Equation 4]

$$o_2 = o_1 * Q(\Delta t \cdot r).$$

In an embodiment, * may represent quaternion multiplication. In an embodiment, $\alpha$ may be calculated using $o_2$.

In an embodiment, the electronic device 110 may calculate a pen tip location of the electronic pen 120 by using at least one of the location S, the location E, the distance a, the distance b, and the tilt angle $\alpha$.

In an embodiment, the electronic device 110 may obtain missing stroke data via pen tip location information of the electronic pen 120 obtained using a location of the beacon 1410 included in the electronic device 110 and a location of the beacon 1420 included in the electronic pen 120.

In an embodiment, the electronic device 110 may obtain a missing stroke by using the missing stroke data. In an embodiment, the missing stroke may be a stroke connected by calculating a pen tip location of the electronic pen 120. In an embodiment, the electronic device 110 may obtain the missing stroke by calculating the pen tip location of the electronic pen 120 on the virtual display area.

In an embodiment, the electronic device 110 may adjust a layout of the displayable area based on the missing stroke data. In an embodiment, the electronic device 110 may adjust the layout of the displayable area based on the obtained missing stroke.

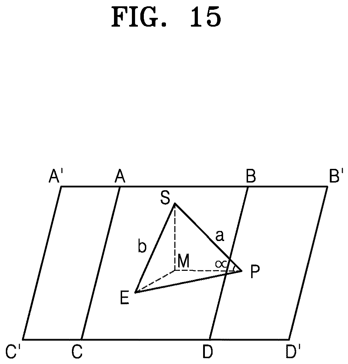

FIG. 15 is a diagram illustrating a method for calculating a pen tip location of the electronic pen 120 by using location of beacon, according to an embodiment.

Referring to FIG. 15, vertices of a displayable area of the electronic device 110 may be A, B, C, and D. In an embodiment, vertices of a virtual display area extending beyond the displayable area of the electronic device 110 may be A', B', C', and D'.

In an embodiment, a location of a beacon included in the electronic device 110 may be E. In an embodiment, a location of a beacon included in the electronic pen 120 may be S.

In an embodiment, a location of a pen tip of the electronic pen 120 may be P. In an embodiment, a point at which a line drawn perpendicular to a plane ABCD from S meets the plane ABCD may be M.

In an embodiment, M, E, and P may be points located on the plane A'B'C'D', and they may all have the same z-axis coordinate.

In an embodiment, a distance from the location of the beacon included in the electronic pen 120 to the pen tip of the electronic pen 120 may be a. In an embodiment, a distance from the location of the beacon included in the electronic pen 120 to the location of the beacon included in the electronic device 110 may be b.

In an embodiment, a tilt angle between the line segment SP and the line segment PM may be $\alpha$.

In an embodiment, the coordinates of S may be represented by $(x_s, y_s, z_s)$. In an embodiment, the coordinates of E may be represented by $(x_E, y_E, z_E)$.

In an embodiment, the values of a and b may be calculated as described with reference to FIG. 14. In an embodiment, the value of $\alpha$ may be calculated as described with reference to FIG. 14.

In an embodiment, lengths of a side SM and a side MP of the three sides of a triangle SMP may be expressed via the following Equation.

[Equation 5]

$$SM = a \cdot \sin\alpha$$

$$MP = a \cdot \cos\alpha$$

In an embodiment, a length of a side ME of the three sides of a triangle SEM may be expressed via the following Equation.

[Equation 6]

$$ME = \sqrt{(SE^2 - MS^2)} = \sqrt{(b^2 - (a \cdot \sin\alpha)2)}$$

In an embodiment, the square of the length of the side ME of the three sides of the triangle SEM may be expressed via the following Equation by using the coordinates of M and the coordinates of E.

[Equation 7]

$$ME^2 = (x_E - x_M)^2 + (y_E - y_M)^2 + (z_E - z_M)^2$$

In an embodiment, E and M are points located on the plane ABCD, and $z_E$ and $z_M$ may have the same value. In an embodiment, the value of $(z_E - z_M)^2$ may be 0.

In an embodiment, the square of the length of the side ME of the three sides of the triangle SEM may be expressed via the following Equation.

[Equation 8]

$$b^2 - (a \cdot \sin\alpha)^2 = (x_E - x_M)^2 + (y_E - y_M)^2$$

In an embodiment, the square of the length of the side SM of the three sides of the triangle SEM may be expressed via the following Equation by using the coordinates of S and the coordinates of M.

[Equation 9]

$$SM^2 = (x_S - x_M)^2 + (y_S - y_M)^2 + (z_S - z_M)^2$$

In an embodiment, the square of the length of the side SM of the three sides of the triangle SEM may be expressed via the following Equation.

[Equation 10]

$$(a \cdot \sin \propto )^2 = (x_S - x_M)^2 + (y_S - y_M)^2 + (z_S - z_M)^2$$

In an embodiment, the coordinates of M may be calculated using the Equations 8 and 10.

In an embodiment, coordinates of P may be calculated using at least one of the coordinates of M, the coordinates of S, the length of side MP, the length of side SM, and the length of a.

In an embodiment, the electronic device 110 may obtain missing stroke data by calculating P that is the location of the pen tip of the electronic pen 120 on the virtual display area.

In an embodiment, the electronic device 110 may obtain a missing stroke by calculating P that is the location of the pen tip of the electronic pen 120 on the virtual display area. In an embodiment, the missing stroke may be a stroke connected by calculating a pen tip location of the electronic pen 120.

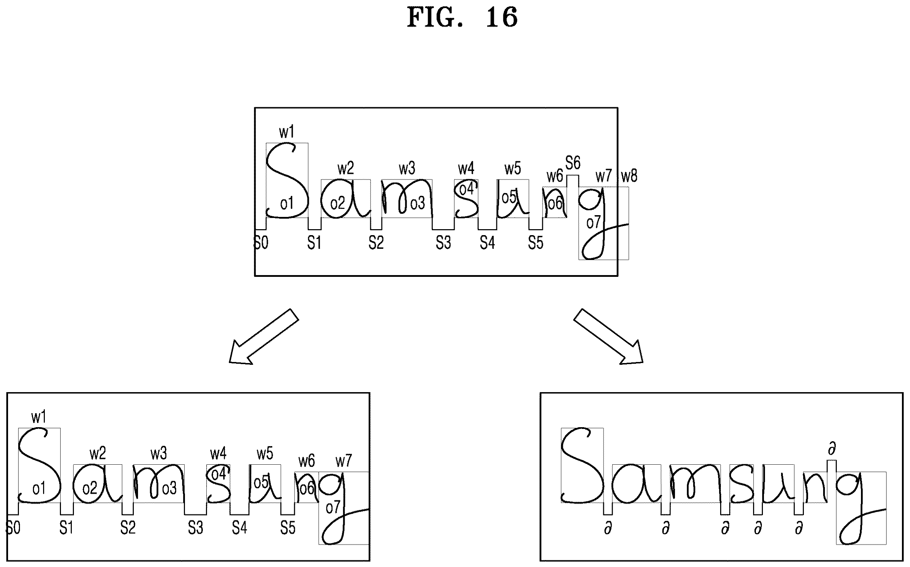

FIG. 16 is a diagram illustrating a method for adjusting a layout of a displayable area based on an empty space between each stroke, according to an embodiment.

Referring to FIG. 16, the electronic device 110 may receive stroke data related to a stroke using the electronic pen 120. In an embodiment, by using the received stroke data, the electronic device 110 may display the stroke using the electronic pen 120 in the displayable area of the electronic device 110.

In an embodiment, the strokes using the electronic pen 120 may be "Samsung". In an embodiment, "Samsung", which is the strokes using the electronic pen 120, may be displayed in the displayable area of the electronic device 110.

In an embodiment, the electronic device 110 may detect a missing stroke, which is a stroke made using the electronic pen 120 outside of the displayable area of the electronic device 110. In an embodiment, the missing stroke may be an end portion of the last letter 'g' in "Samsung", which is the strokes using the electronic pen 120.

In an embodiment, the electronic device 110 may obtain missing stroke data regarding the detected missing stroke.

In an embodiment, the missing stroke data may include at least one of pen tip location data, accelerometer data, gyroscope data, magnetometer data, tilt data, time data, sensor data, and direction data of the electronic pen 120. However, the missing stroke data is not limited thereto.

In an embodiment, the electronic device 110 may adjust a layout of the displayable area based on the missing stroke data.

In an embodiment, the electronic device 110 may adjust the layout of the displayable area by comparing a size of an empty space between each stroke with a size of the missing stroke.

In an embodiment, the strokes themselves may be respectively represented by o1, o2, o3, o4, o5, o6, and o7. In an embodiment, o1 may represent "S", o2 may represent "a", o3 may represent "m", o4 may represent "s", o5 may represent "u", o6 may represent "n", and o7 may represent "g".

In an embodiment, the sizes of the strokes in the displayable area of the electronic device 110 may be respectively represented by w1, w2, w3, w4, w5, w6, and w7. In an embodiment, a size of the missing stroke may be represented by w8. In one embodiment, each w may represent a minimum horizontal width of a stroke.

In an embodiment, empty spaces between each stroke may be represented by S1, S2, S3, S4, S5, and S6. In an embodiment, each S may represent a minimum distance between each stroke.

In an embodiment, a space between a first stroke and an end of an edge of the displayable area of the electronic device 110 may be represented by S0. In an embodiment, S0 may represent a minimum distance between the first stroke and the end of the edge of the displayable area of the electronic device 110.

In an embodiment, the electronic device 110 may determine whether there is an empty space between strokes that is greater than or equal to the size of the missing stroke. In an embodiment, the electronic device 110 may determine whether there is an S that is greater than or equal to w8.

In an embodiment, the electronic device 110 may start from an empty space close to the missing stroke when determining whether there is an empty space between strokes that is greater than or equal to the size of the missing stroke. For example, the electronic device 110 may perform the determination in the order of S6, S5, S4..., and S0.

In an embodiment, when the electronic device 110 determines that there is an empty space between strokes that is greater than or equal to the size of the missing stroke, the electronic device 110 may move a stroke to the corresponding empty space between the strokes by the size of the missing stroke.

In an embodiment, in case that the electronic device 110 determines that there is an empty space between strokes that is greater than or equal to the size of the missing stroke, the electronic device 110 may move a stroke on the left or right of the corresponding empty space to the empty space by the amount of the size of the missing stroke.

In an embodiment, when the electronic device 110 determines that S6 is greater than or equal to w8, the electronic device 110 may move the stroke corresponding to o7 by w8.

In an embodiment, the electronic device 110 may display the missing stroke in the displayable area of the electronic device 110 by moving the stroke.

In an embodiment, in case that the electronic device 110 determines that there is no empty space between strokes that is greater than or equal to the size of the missing stroke, the electronic device 110 may move each stroke such that an empty space between each stroke is the same.

In an embodiment, by comparing the empty space between each stroke with the size of the missing stroke, the electronic device 110 may determine whether the missing stroke may be corrected(or compensated) by moving each stroke.

In an embodiment, the electronic device 110 may determine whether the following Equation is satisfied.

[Equation 11]

$$\sum_{i=0}^{6} S[i] - \Delta * n \ \geq W8$$

In an embodiment, $\Delta$ may represent a minimum distance that can separate two strokes. In an embodiment, n may represent the number of empty spaces between each stroke. For example, n may be 6, which is the number of empty spaces between each stroke in the strokes "Samsung".

In an embodiment, when Equation 11 is satisfied, the electronic device 110 may move each stroke such that an empty space between each stroke is the same.

In an embodiment, a total size of empty spaces between each stroke after the moving may be represented by Ss. In an embodiment, Ss may be expressed via the following Equation.

[Equation 12]

$$Ss = \sum_{i=0}^{6} S[i] - W8 - \Delta * n$$

In an embodiment, a size of an empty space between each stroke moved may be represented by $\partial$. In an embodiment, $\partial$ may be expressed via the following Equation.

[Equation 13]

$$\partial = \frac{Ss}{n}$$

In an embodiment, in case that the electronic device 110 determines that there is no empty space between strokes that is greater than or equal to the size of the missing stroke, the electronic device 110 may move each stroke such that an empty space between each stroke is $\partial$.

In an embodiment, the electronic device 110 may display the missing stroke in the displayable area of the electronic device 110 by moving each stroke.

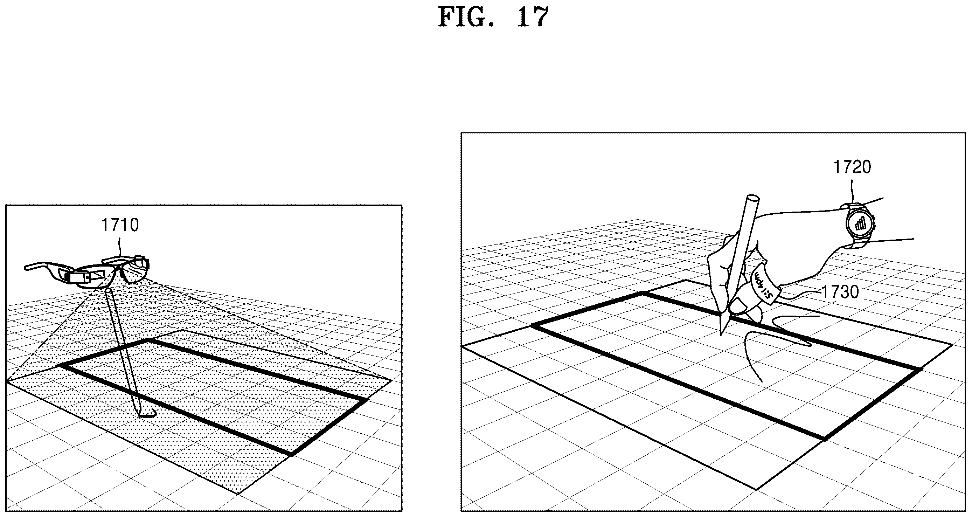

FIG. 17 is a diagram illustrating a method for obtaining missing stroke data by using at least one of smart glasses 1710, a smart ring 1730, and a smart watch 1720, according to an embodiment.

Referring to FIG. 17, the electronic device 110 may receive stroke data related to a stroke using the electronic pen 120. In an embodiment, by using the received stroke data, the electronic device 110 may display, in a displayable area of the electronic device 110, a stroke generated using the electronic pen 120.

In an embodiment, the electronic device 110 may detect a missing stroke, which is a stroke made using the electronic pen 120 outside of the displayable area of the electronic device 110.

In an embodiment, the electronic device 110 may generate a virtual display area that extends beyond the displayable area in a direction in which the missing stroke is detected.

In an embodiment, the electronic device 110 may obtain missing stroke data by calculating a pen tip location of the electronic pen 120 on the virtual display area.

In an embodiment, the missing stroke data may include at least one of pen tip location data, accelerometer data, gyroscope data, magnetometer data, tilt data, time data, sensor data, direction data, and beacon location data of the electronic pen 120. However, the missing stroke data is not limited thereto.

In an embodiment, the electronic device 110 may obtain a missing stroke by using the missing stroke data. In an embodiment, the missing stroke may be a stroke connected by calculating the pen tip location of the electronic pen 120 on the virtual display area.

In an embodiment, by using the missing stroke data, the electronic device 110 may obtain the missing stroke connected by calculating the pen tip location of the electronic pen 120 on the virtual display area.

In an embodiment, the electronic device 110 may obtain the missing stroke by calculating the pen tip location of the electronic pen 120 on the virtual display area.

In an embodiment, the electronic device 110 may obtain missing stroke data by using at least one of smart glasses 1710, a smart ring 1730, and a smart watch 1720.

In an embodiment, the smart glasses 1710 may refer to a smart device in the form of eyeglasses with a computer installed therein and implements a see-through function and a recording function. **In** an embodiment, the smart glasses 1710 may include at least one of a camera, an interface device, and a device for transmitting an image. However, the smart glasses 1710 are not limited thereto.

In an embodiment, the smart watch 1720 may refer to a smart device that is connected to the electronic device 110 to perform at least one of the functions of a watch, a phone call, a text message, an email, music, and a game. However, the smart watch 1720 is not limited thereto.

In an embodiment, the smart ring 1730 is a wearable computer in the form of a ring, and may refer to a smart device that performs at least one of the functions of controlling the electronic device 110, analyzing the user's health status, and making payments. However, the smart ring 1730 is not limited thereto.

In an embodiment, the smart glasses 1710 may display in real time the virtual display area that is extended beyond the displayable area of the electronic device 110.

In an embodiment, the smart glasses 1710 may display the virtual display area in real time by receiving missing stroke data from the electronic device 110 and the electronic pen 120.

In an embodiment, the electronic device 110 and the electronic pen 120 may transmit the missing stroke data to the smart glasses 1710.

In an embodiment, a user wearing smart glasses 1710 may view in real time the virtual display area that is extended beyond the displayable area of the electronic device 110.

In an embodiment, the smart glasses 1710 may display a missing stroke on the virtual display area in real time by using the missing stroke data. In an embodiment, the user wearing smart glasses 1710 may view the missing stroke on the virtual display area in real time.

In one embodiment, data regarding the missing stroke on the virtual display area obtained using the smart glasses 1710 may be transmitted to the electronic device 110.

In an embodiment, the data obtained using the smart glasses 1710 may be included in missing stroke data.

In an embodiment, the smart watch 1720 and the smart ring 1730 may be used to obtain missing stroke data.

In an embodiment, the smart watch 1720 and smart ring 1730 may be used to obtain data regarding at least one of an acceleration of the electronic pen 120, a tilt thereof, a distance from the electronic device 110, and a location of the user's hand. However, the smart watch 1720 and smart ring 1730 are not limited thereto.

In an embodiment, the missing stroke data obtained using the smart watch 1720 and the smart ring 1730 may be used to improve the accuracy of calculation of a pen tip location of the electronic pen 120.

In an embodiment, the missing stroke data obtained using the smart watch 1720 and the smart ring 1730 may be used to improve the accuracy of the missing stroke.

In an embodiment, the electronic device 110 may adjust a layout of the displayable area based on the missing stroke data. **In** an embodiment, the missing stroke may be displayed in the displayable area according to the adjusted layout.

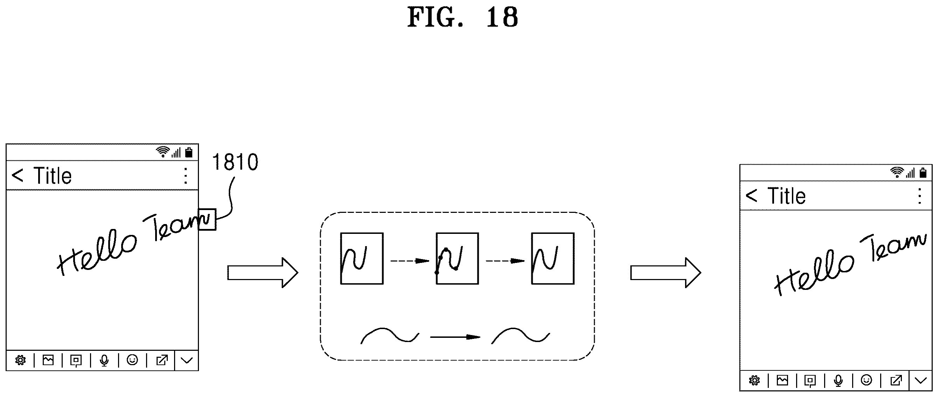

FIG. 18 is a diagram illustrating a process for correcting a missing stroke 1810, according to an embodiment.

Referring to FIG. 18, the electronic device 110 may receive stroke data related to a stroke using the electronic pen 120. **In** an embodiment, by using the received stroke data, the electronic device 110 may display the stroke using the electronic pen 120 in a displayable area of the electronic device 110.

In an embodiment, the strokes using the electronic pen 120 may be "Hello Team". In an embodiment, "Hello Team", which is the strokes using the electronic pen 120, may be displayed in the displayable area of the electronic device 110.

In an embodiment, the electronic device 110 may detect the missing stroke 1810, which is a stroke using the electronic pen 120 outside of the displayable area of the electronic device 110. In an embodiment, the missing stroke 1810 may be an end portion of the last letter 'm' in "Hello Team," which is the strokes using the electronic pen 120.

In an embodiment, the electronic device 110 may obtain missing stroke data regarding the detected missing stroke 1810.

In an embodiment, the electronic device 110 may obtain the missing stroke 1810 by using the missing stroke data. In an embodiment, the missing stroke 1810 may be a stroke connected by calculating a pen tip location of the electronic pen 120 on a virtual display area.

In an embodiment, the calculated pen tip location of the electronic pen 120 may be a collection of non-contiguous points. In an embodiment, the missing stroke 1810 may be represented as a discontinuous stroke.

In an embodiment, the electronic device 110 may correct(or compensate, make up, reconstruct) the missing stroke 1810, thereby converting it into a continuous stroke.

In an embodiment, the electronic device 110 may use a filter or algorithm to correct the missing stroke 1810. For example, the filter or algorithm used to correct the missing stroke 1810 may be an epsilon filter, a mean shift algorithm, or a mean estimation algorithm.

In an embodiment, the electronic device 110 may display the corrected missing stroke 1810 in the displayable area.

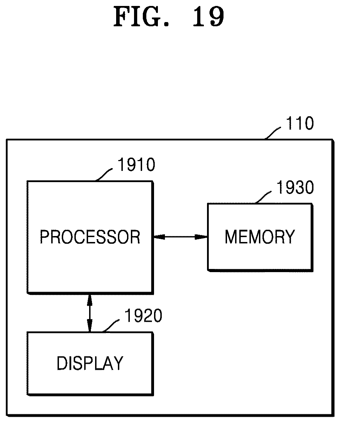

FIG. 19 is a block diagram of a configuration of the electronic device 110 according to an embodiment.

Referring to FIG. 19, the electronic device 110 may include a processor 1910, a display 1920, and a memory 1930.

In an embodiment, the processor 1910 controls all operations of the electronic device 110 and a flow of signals between the internal components of the electronic device 110, and performs a function of processing data.

In an embodiment, the processor 1910 may include a single core, a dual core, a triple core, a quad core, and a number of cores equal to multiples thereof. Furthermore, the processor 1910 may include a plurality of processors. For example, the processor 1910 may be implemented as a main processor (not shown) and a sub processor (not shown) operating in a sleep mode.

In an embodiment, the processor 1910 may include at least one of a central processing unit (CPU), a graphics processing unit (GPU), and a video processing unit (VPU). Alternatively, according to an embodiment, the processor 1910 may be implemented as a system on chip (SoC) that integrates at least one of a CPU, a GPU, and a VPU. Alternatively, the processor 1910 may further include a neural processing unit (NPU).

In an embodiment, the processor 1910 may receive stroke data related to a stroke using the electronic pen 120.

In an embodiment, the processor 1910 may detect a missing stroke, which is a stroke made using the electronic pen 120 outside of a displayable area of the electronic device 110.

In an embodiment, the processor 1910 may obtain missing stroke data regarding the detected missing stroke.

In an embodiment, the processor 1910 may adjust a layout of the displayable area based on the missing stroke data.

In an embodiment, the processor 1910 may display the missing stroke in the displayable area according to the adjusted layout.

In an embodiment, the processor 1910 may activate a missing stroke detection mode when the processor 1910 detects a stroke using the electronic pen 120 at an edge of the displayable area of the electronic device 110.

In an embodiment, the processor 1910 may generate a virtual display area that extends beyond the displayable area in a direction in which the missing stroke is detected.

In an embodiment, the processor 1910 may obtain missing stroke data by calculating a pen tip location of the electronic pen 120 on the virtual displayable area.

In an embodiment, when the processor 1910 detects that the missing stroke returns to the displayable area from outside the displayable area, the processor 1910 may obtain missing stroke data regarding the missing stroke that is outside the displayable area.

In an embodiment, when the processor 1910 detects that the missing stroke has occurred entirely outside of the displayable area, the processor 1910 may obtain missing stroke data by using data from at least one of an accelerometer and a gyroscope included in the electronic pen 120 until at least one of an acceleration and coordinates of the electronic pen 120 does not exceed a corresponding threshold value.

In an embodiment, the processor 1910 may obtain missing stroke data via pen tip location information of the electronic pen 120 obtained using a location of a beacon included in the electronic device 110 and a location of a beacon included in the electronic pen 120.

In an embodiment, when there is an empty space in the displayable area based on at least one of a direction of use of the electronic pen 120, the virtual display area, and the displayable area, the processor 1910 may move an entire set of strokes to the empty space.

In an embodiment, when there is no empty space in the displayable area, the processor 1910 may adjust a size of the entire set of strokes according to a ratio between the virtual display area and the displayable area.

In an embodiment, the processor 1910 may adjust the layout of the displayable area by comparing a size of an empty space between each stroke with a size of the missing stroke.

In an embodiment, the processor 1910 may obtain missing stroke data by using at least one of smart glasses, a smart ring, and a smart watch.

According to an embodiment, the display 1920 generates a driving signal by converting an image signal, a data signal, an on-screen display (OSD) signal, a control signal, etc. processed by the processor 1910. The display 1920 may be implemented as a plasma display panel (PDP), a liquid crystal display (LCD), an organic light-emitting diode (OLED) display, a flexible display, or the like, and may also be implemented as a 3D display. Furthermore, the display 1920 may be configured as a touch screen and used as an input device as well as an output device.

In an embodiment, the memory 1930 may store various pieces of data, programs, or applications for driving and controlling the electronic device 110.

In an embodiment, a program stored in the memory 1930 may include one or more instructions. The program (one or more instructions) or application stored in the memory 1930 may be executed by the processor 1910.

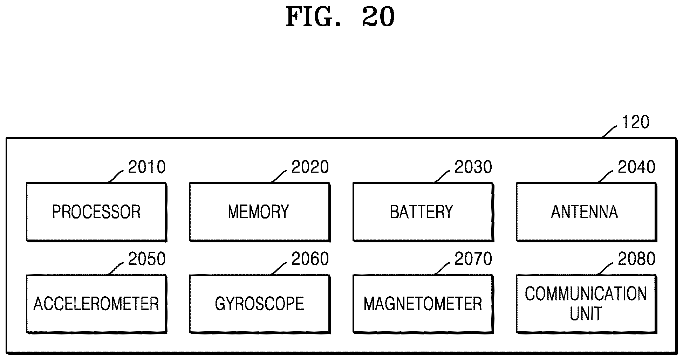

FIG. 20 is a diagram illustrating a configuration of the electronic pen 120 according to an embodiment.

Referring to FIG. 20, the electronic pen 120 may include a processor 2010, a memory 2020, a battery 2030, an antenna 2040, an accelerometer 2050, a gyroscope 2060, a magnetometer 2070, and a communication unit 2080.

In an embodiment, the processor 2010 controls all operations of the electronic pen 120 and a flow of signals between the internal components of the electronic pen 120, and performs a function of processing data.

In an embodiment, the processor 2010 may include a single core, a dual core, a triple core, a quad core, and a number of cores equal to multiples thereof. Furthermore, the processor 2010 may include a plurality of processors. For example, the processor 2010 may be implemented as a main processor (not shown) and a sub processor (not shown) operating in a sleep mode.

In an embodiment, the processor 2010 may include at least one of a CPU, a GPU, and a VPU. Alternatively, according to an embodiment, the processor 140 may be implemented as a system on chip (SoC) that integrates at least one of a CPU, a GPU, and a VPU. Alternatively, the processor 2010 may further include an NPU.

In an embodiment, the memory 2020 may store various pieces of data, programs, or applications for driving and controlling the electronic pen 120.

In an embodiment, a program stored in the memory 2020 may include one or more instructions. The program (one or more instructions) or application stored in the memory 2020 may be executed by the processor 2010.

In an embodiment, the battery 2030 may store power required for operation of the electronic pen 120. For example, the battery 2030 may be a lithium-ion battery, a primary cell, a secondary cell, or a fuel cell. In an embodiment, the battery 2030 may be rechargeable or replaceable.

In an embodiment, the antenna 2040 may be used to transmit or receive signals or power to or from the outside. **In** an embodiment, the electronic pen 120 may exchange signals or power with the electronic device 110 via the antenna 2040.

In an embodiment, the accelerometer 2050 may be a sensor capable of measuring the acceleration of the electronic pen 120 along 3D coordinate axes. In an embodiment, the electronic pen 120 may obtain missing stroke data by using the accelerometer 2050.

In an embodiment, the gyroscope 2060 may be a sensor capable of measuring a rotation direction, a rotation angle, and an angular velocity of the electronic pen 120 in three dimensions. **In** an embodiment, the electronic pen 120 may obtain missing stroke data by using the gyroscope 2060.

In an embodiment, the magnetometer 2070 may be a sensor that measures a magnetic field or magnetic moment of the electronic pen 120. In an embodiment, the electronic pen 120 may obtain information about a direction of the electronic pen 120 by using the magnetometer 2070.

In an embodiment, the communication unit 2080 may transmit and receive data or signals to and from an external device (e.g., the electronic device 110) or a server. For example, the communication unit 2080 may include a WiFi module, a Bluetooth module, an infrared communication module, a wireless communication module, a local area network (LAN) module, an Ethernet module, a wired communication module, etc. **In** this case, each communication module may be implemented in the form of at least one hardware chip.

A method for displaying, on an electronic device, a stroke using an electronic pen, according to an embodiment, may include activating a missing stroke detection mode when the stroke using the electronic pen is detected at an edge of a displayable area of the electronic device.

According to an embodiment, the method for displaying, on the electronic device, the stroke using the electronic pen may include generating a virtual display area that extends beyond the displayable area in a direction in which a missing stroke is detected.

According to an embodiment, the method for displaying, on the electronic device, the stroke using the electronic pen may include obtaining missing stroke data by calculating a pen tip location of the electronic pen on the virtual display area.

According to an embodiment, the method for displaying, on the electronic device, the stroke using the electronic pen may include, in case that it is detected that the missing stroke returns to the displayable area from outside the displayable area, obtaining the missing stroke data for the missing stroke that is outside the displayable area.

According to an embodiment, the method for displaying, on the electronic device, the stroke using the electronic pen may include, in case that it is detected that the missing stroke has occurred entirely outside the displayable area, obtaining the missing stroke data by using data from at least one of an accelerometer and a gyroscope included in the electronic pen until at least one of an acceleration and coordinates of the electronic pen does not exceed a corresponding threshold value.

According to an embodiment, the method for displaying, on the electronic device, the stroke using the electronic pen may include obtaining the missing stroke data via pen tip location information of the electronic pen obtained using a location of a beacon included in the electronic device and a location of a beacon included in the electronic pen.

According to an embodiment, the method for displaying, on the electronic device, the stroke using the electronic pen may include, in case that there is an empty space in the displayable area based on at least one of a direction of use of the electronic pen, the virtual display area, and the displayable area, moving an entire set of strokes to the empty space.

According to an embodiment, the method for displaying, on the electronic device, the stroke using the electronic pen may include, in case that the empty space does not exist, adjusting a size of the entire set of strokes according to a ratio between the virtual display area and the displayable area.

According to an embodiment, the method for displaying, on the electronic device, the stroke using the electronic pen may include adjusting a layout of the displayable area by comparing a size of an empty space between each stroke with a size of the missing stroke.

According to an embodiment, the method for displaying, on the electronic device, the stroke using the electronic pen may include obtaining the missing stroke data by using at least one of smart glasses, a smart ring, and a smart watch.

At least one processor may be configured to execute at least one instruction to activate a missing stroke detection mode when a stroke using an electronic pen is detected at an edge of a displayable area of a display.

The at least one processor may be configured to execute the at least one instruction to generate a virtual display area that extends beyond the displayable area in a direction in which the missing stroke is detected.

The at least one processor may be configured to execute the at least one instruction to obtain missing stroke data by calculating a pen tip location of the electronic pen on the virtual display area.

The at least one processor may be configured to execute the at least one instruction to, in case that it is detected that the missing stroke returns to the displayable area from outside the displayable area, obtain the missing stroke data for the missing stroke that is outside the displayable area.

The at least one processor may be configured to execute the at least one instruction to, in case that it is detected that the missing stroke has occurred entirely outside the displayable area, obtain the missing stroke data by using data from at least one of an accelerometer and a gyroscope included in the electronic pen until at least one of an acceleration and coordinates of the electronic pen does not exceed a corresponding threshold value.

The at least one processor may be configured to execute the at least one instruction to obtain the missing stroke data via pen tip location information of the electronic pen obtained using a location of a beacon included in the electronic device and a location of a beacon included in the electronic pen.

The at least one processor may be configured to execute the at least one instruction to, in case that there is an empty space in the displayable area based on at least one of a direction of use of the electronic pen, the virtual display area, and the displayable area, move an entire set of strokes to the empty space.

The at least one processor may be configured to execute the at least one instruction to, in case that the empty space does not exist, adjust a size of the entire set of strokes according to a ratio between the virtual display area and the displayable area.

The at least one processor may be configured to execute the at least one instruction to adjust a layout of the displayable area by comparing a size of an empty space between each stroke with a size of the missing stroke.

A method for displaying, on an electronic device, a stroke using an electronic pen, according to an embodiment, may be implemented in the form of program commands that may be performed by various types of computers, and recorded on computer-readable recording media. The computer-readable recording media may include program commands, data files, data structures, etc. either alone or in combination. The program commands recorded on the computer-readable recording media may be designed and configured specially for the disclosure or may be known to and be usable by those of ordinary skill in the art of computer software. Examples of the computer-readable recording media include magnetic media such as hard disks, floppy disks, and magnetic tapes, optical media such as compact disk read-only memory (CD-ROM) and digital versatile disks (DVDs), magneto-optical media such as floptical disks, and hardware devices that are specially configured to store and perform program commands, such as ROM, random access memory (RAM), flash memory, etc. Examples of program commands include not only machine code such as that created by a compiler but also high-level language code that may be executed by a computer using an interpreter or the like.

In addition, methods for displaying, on an electronic device, a stroke using an electronic pen, according to disclosed embodiments, may be included in a computer program product when provided. The computer program product may be traded, as a product, between a seller and a buyer.

The computer program product may include a software program and a computer-readable storage medium having the software program stored thereon. For example, the computer program product may include a product (e.g., a downloadable application) in the form of a software program electronically distributed by a manufacturer of an electronic device or through an electronic market (e.g., Google Play Store ™, and App Store ™). For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

In a system consisting of a server and a client device, the computer program product may include a storage medium of the server or a storage medium of the client device. Alternatively, in a case where there is a third device (e.g., a smartphone) communicatively connected to the server or client device, the computer program product may include a storage medium of the third device. Alternatively, the computer program product may include a software program itself that is transmitted from the server to the client device or the third device or that is transmitted from the third device to the client device.

In this case, one of the server, the client device, and the third device may execute the computer program product to perform the methods according to the disclosed embodiments. Alternatively, at least two of the server, the client device, and the third device may execute the computer program product to perform the methods according to the disclosed embodiments in a distributed manner.

For example, the server (e.g., a cloud server, an artificial intelligence (AI) server, or the like) may execute the computer program product stored therein to control the client device communicatively connected to the server to perform the methods according to the disclosed embodiments.

While embodiments have been particularly described above, the embodiments are not to be construed as limiting the scope of the disclosure, and various modifications and improvements made by those of ordinary skill in the art based on a basic concept of the disclosure also fall within the scope of the disclosure as defined by the following claims.

**Claims**

1.  A method for displaying, on an electronic device (110), a stroke made using an electronic pen (120), the method comprising:

    receiving stroke data related to a stroke made using the electronic pen (120) (210);
    detecting a missing stroke, which is a stroke made using the electronic pen (120) outside of a displayable area of the electronic device (110) (220);
    obtaining missing stroke data regarding the detected missing stroke (230);
    adjusting a layout of the displayable area based on the missing stroke data (240); and
    displaying the missing stroke in the displayable area according to the adjusted layout (250).

2.  The method of claim 1, further comprising, in case that the stroke made using the electronic pen (120) is detected at an edge of the displayable area of the electronic device (110), activating a missing stroke detection mode.

3.  The method of claim 1 or 2, further comprising:

    generating a virtual display area that extends beyond the displayable area in a direction in which the missing stroke is detected; and
    obtaining the missing stroke data by calculating a pen tip location of the electronic pen (120) on the virtual display area.

4.  The method of any one of claims 1 to 3, wherein the obtaining of the missing stroke data regarding the detected missing stroke comprises, in case that it is detected that the missing stroke returns to the displayable area from outside the displayable area, obtaining the missing stroke data for the missing stroke that is outside the displayable area.

5.  The method of any one of claims 1 to 4, wherein the obtaining of the missing stroke data regarding the detected missing stroke comprises, in case that it is detected that the missing stroke has occurred entirely outside the displayable area, obtaining the missing stroke data by using data from at least one of an accelerometer (2050) and a gyroscope (2060) included in the electronic pen (120) until at least one of an acceleration and coordinates of the electronic pen (120) does not exceed a corresponding threshold value.

6.  The method of any one of claims 1 to 5, wherein the obtaining of the missing stroke data regarding the detected missing stroke comprises obtaining the missing stroke data via pen tip location information of the electronic pen (120)

obtained using a location of a beacon (1410) included in the electronic device (110) and a location of a beacon (1420) included in the electronic pen (120).

7.  The method of any one of claims 1 to 6, wherein the adjusting of the layout of the displayable area based on the missing stroke data comprises, in case that there is an empty space in the displayable area based on at least one of a direction of use of the electronic pen (120), the virtual display area, and the displayable area, moving an entire set of strokes to the empty space.

8.  The method of any one of claims 1 to 7, wherein the adjusting of the layout of the displayable area based on the missing stroke data comprises, in case that the empty space does not exist, adjusting a size of the entire set of strokes according to a ratio between the virtual display area and the displayable area.

9.  The method of any one of claims 1 to 8, wherein the adjusting of the layout of the displayable area based on the missing stroke data comprises adjusting the layout of the displayable area by comparing a size of an empty space between each stroke with a size of the missing stroke.

10. The method of any one of claims 1 to 9, wherein the obtaining of the missing stroke data regarding the detected missing stroke comprises obtaining the missing stroke data by using at least one of smart glasses (1710), a smart ring (1730), and a smart watch (1720).

11. An electronic device (110) for displaying a stroke made using an electronic pen (120), the electronic device (110) comprising:

    a display (1920);
    a memory (1930) storing at least one instruction; and
    at least one processor (1910),
    wherein the at least one processor (1910) is configured to execute the at least one instruction to
    receive stroke data related to a stroke made using the electronic pen (120),
    detect a missing stroke, which is a stroke made using the electronic pen (120) outside of a displayable area of the display (1920),
    obtain missing stroke data regarding the detected missing stroke,
    adjust a layout of the displayable area based on the missing stroke data, and
    display the missing stroke in the displayable area according to the adjusted layout.

12. The electronic device (110) of claim 11, wherein the at least one processor (1910) is further configured to execute the at least one instruction to, in case that the stroke made using the electronic pen (120) is detected at an edge of the displayable area of the electronic device (110), activate a missing stroke detection mode.

13. The electronic device (110) of claim 11 or 12, wherein

    the at least one processor (1910) is further configured to execute the at least one instruction to
    generate a virtual display area that extends beyond the displayable area in a direction in which the missing stroke is detected, and
    obtain the missing stroke data by calculating a pen tip location of the electronic pen (120) on the virtual display area.

14. The electronic device (110) of any one of claims 11 to 13, wherein the at least one processor (1910) is further configured to execute the at least one instruction to, in case that it is detected that the missing stroke returns to the displayable area from outside the displayable area, obtain the missing stroke data for the missing stroke that is outside the displayable area.

15. The electronic device (110) of any one of claims 11 to 14, wherein the at least one processor (1910) is further configured to execute the at least one instruction to, in case that it is detected that the missing stroke has occurred entirely outside the displayable area, obtain the missing stroke data by using data from at least one of an accelerometer (2050) and a gyroscope (2060) included in the electronic pen (120) until at least one of an acceleration and coordinates of the electronic pen (120) does not exceed a corresponding threshold value.

16. The electronic device (110) of any one of claims 11 to 15, wherein the at least one processor (1910) is further configured to execute the at least one instruction to obtain the missing stroke data via pen tip location information of the electronic pen (120) obtained using a location of a beacon (1410) included in the electronic device (110) and a location of a beacon (1420) included in the electronic pen (120).

17. The electronic device (110) of any one of claims 11 to 16, wherein the at least one processor (1910) is further configured to execute the at least one instruction to, in case that there is an empty space in the displayable area based on at least one of a direction of use of the electronic pen (120), the virtual display area, and the displayable area, move an entire set of strokes to the empty space.

18. The electronic device (110) of any one of claims 11 to 17, wherein the at least one processor (1910) is further configured to execute the at least one instruction to, in case that the empty space does not exist, adjust a size of the entire set of strokes according to a ratio between the virtual display area and the displayable area.

19. The electronic device (110) of any one of claims 11 to 18, wherein the at least one processor (1910) is further configured to execute the at least one instruction to adjust the layout of the displayable area by comparing a size of an empty space between each stroke with a size of the missing stroke.

20. A computer-readable recording medium having stored thereon a program for performing the method of any one of claims 1 to 10.

# FIG. 1

EP 4 660 762 A1

# FIG. 2

```
                    ┌─────────────┐
                    │    START    │
                    └──────┬──────┘
                           │
                           ▼
        ┌──────────────────────────────────┐
        │       RECEIVE STROKE DATA        │──── 210
        └──────────────────┬───────────────┘
                           │
                           ▼
        ┌──────────────────────────────────┐
        │      DETECT MISSING STROKE       │──── 220
        └──────────────────┬───────────────┘
                           │
                           ▼
        ┌──────────────────────────────────┐
        │    OBTAIN MISSING STROKE DATA    │──── 230
        └──────────────────┬───────────────┘
                           │
                           ▼
        ┌──────────────────────────────────┐
        │        ADJUST LAYOUT OF          │──── 240
        │       DISPLAYABLE AREA           │
        └──────────────────┬───────────────┘
                           │
                           ▼
        ┌──────────────────────────────────┐
        │   DISPLAY MISSING STROKE IN      │──── 250
        │       DISPLAYABLE AREA           │
        └──────────────────┬───────────────┘
                           │
                           ▼
                    ┌─────────────┐
                    │     END     │
                    └─────────────┘
```

# FIG. 3

# FIG. 4

110

120

110  410

DISTANCE: m

ACTIVATE MISSING STROKE DETECTION MODE

# FIG. 5

# FIG. 6

# FIG. 7

START

710
DOES MISSING
STROKE DATA EXIST? —— NO —— END

YES

GENERATE VIRTUAL DISPLAY AREA —— 720

CALCULATE PEN TIP LOCATION OF
ELECTRONIC PEN ON VIRTUAL
DISPLAY AREA —— 730

OBTAIN MISSING STROKE DATA —— 740

END

# FIG. 8

## FIG. 9

EP 4 660 762 A1

FIG. 10

# FIG. 11

START

OBTAIN MISSING STROKE DATA — 1110

OBTAIN INFORMATION REGARDING
DIRECTION OF USE OF ELECTRONIC
PEN, VIRTUAL DISPLAY AREA,
AND DISPLAYABLE AREA — 1120

1130

IS THERE
EMPTY SPACE IN DISPLAYABLE
AREA?

YES → MOVE ENTIRE SET OF
STROKES TO
EMPTY SPACE — 1150

NO

ADJUST SIZE OF ENTIRE SET OF
STROKES ACCORDING TO RATIO
BETWEEN VIRTUAL DISPLAY AREA
AND DISPLAYABLE AREA — 1140

END

# FIG. 12

# FIG. 13

# FIG. 14

# FIG. 15

FIG. 16

**FIG. 17**

# FIG. 18

EP 4 660 762 A1

# FIG. 19

# FIG. 20

## INTERNATIONAL SEARCH REPORT

| | International application No. |
|---|---|
| | **PCT/KR2023/003595** |

**A.    CLASSIFICATION OF SUBJECT MATTER**

**G06F 3/041**(2006.01)i; **G06F 3/04883**(2022.01)i; **G06F 3/0354**(2013.01)i

According to International Patent Classification (IPC) or to both national classification and IPC

**B.    FIELDS SEARCHED**

Minimum documentation searched (classification system followed by classification symbols)

G06F 3/041(2006.01); G06F 3/01(2006.01); G06F 3/03(2006.01); G06F 3/033(2006.01); G06F 3/0354(2013.01); G06F 3/0484(2013.01); G06F 3/0488(2013.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스타일러스(stylus), 스트로크(stroke), 가상 디스플레이(virtual display), 누락 (omission), 레이아웃(layout), 측(tip), 위치(position), 스마트안경(smart eyewear)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2022-0102263 A (SAMSUNG ELECTRONICS CO., LTD.) 20 July 2022 (2022-07-20) See paragraphs [0048], [0051], [0127], [0130] and [0186]-[0189]; and figures 3, 8-9 and 17. | 1-20 |
| Y | KR 10-2014-0114224 A (PNF CO., LTD.) 26 September 2014 (2014-09-26) See paragraphs [0042] and [0052]; and figure 3c. | 1-20 |
| Y | KR 10-2010-0102996 A (LG ELECTRONICS INC.) 27 September 2010 (2010-09-27) See paragraph [0018]; and figure 1a. | 3,7-8,13,17-18 |
| Y | KR 10-2020-0077344 A (LG DISPLAY CO., LTD.) 30 June 2020 (2020-06-30) See paragraphs [0107] and [0110]; and figure 10. | 6,16 |
| Y | KR 10-2014-0105385 A (SAMSUNG ELECTRONICS CO., LTD.) 01 September 2014 (2014-09-01) See paragraphs [0049]-[0050]; and figures 6a-6b. | 8-9,18-19 |

[✓] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2023** | **07 December 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/003595** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 10-2023-0034461 A (SAMSUNG DISPLAY CO., LTD.) 10 March 2023 (2023-03-10)<br>See paragraphs [0037] and [0039]; and figure 1. | 10 |

Form PCT/ISA/210 (second sheet) (July 2022)

**INTERNATIONAL SEARCH REPORT**
Information on patent family members

International application No.

**PCT/KR2023/003595**

| Patent document cited in search report | | | Publication date (day/month/year) | Patent family member(s) | | | Publication date (day/month/year) |
|---|---|---|---|---|---|---|---|
| KR | 10-2022-0102263 | A | 20 July 2022 | CN | 116762051 | A | 15 September 2023 |
| | | | | WO | 2022-154423 | A1 | 21 July 2022 |
| KR | 10-2014-0114224 | A | 26 September 2014 | KR | 10-1467295 | B1 | 01 December 2014 |
| KR | 10-2010-0102996 | A | 27 September 2010 | KR | 10-1557355 | B1 | 06 October 2015 |
| KR | 10-2020-0077344 | A | 30 June 2020 | CN | 111427463 | A | 17 July 2020 |
| | | | | CN | 111427463 | B | 01 August 2023 |
| | | | | DE | 102019133482 | A1 | 25 June 2020 |
| | | | | DE | 19133482 | A1 | 25 June 2020 |
| | | | | KR | 10-2595142 | B1 | 27 October 2023 |
| | | | | US | 10955964 | B2 | 23 March 2021 |
| | | | | US | 2020-0201505 | A1 | 25 June 2020 |
| KR | 10-2014-0105385 | A | 01 September 2014 | CN | 104007925 | A | 27 August 2014 |
| | | | | CN | 104007925 | B | 01 January 2021 |
| | | | | KR | 10-2206373 | B1 | 22 January 2021 |
| KR | 10-2023-0034461 | A | 10 March 2023 | CN | 115728946 | A | 03 March 2023 |
| | | | | US | 2023-0067456 | A1 | 02 March 2023 |

Form PCT/ISA/210 (patent family annex) (July 2022)